# EUROPEAN PATENT APPLICATION

(11) **EP 1 431 711 A2**
(43) Date of publication of application: **23.06.2004**
(21) Application number: 03029247.8
(22) Date of filing: 18.12.2003
(51) Int. Cl.: G01C 21/32

(54) **Apparatus for and method of generating difference update navigation data**

(30) Priority: 19.12.2002 JP 2002368780
(71) Applicant: Pioneer Corporation, Meguro-ku, Tokyo (JP)
(72) Inventor: Hashida, Masaya, Yamada Kawegoe-shi Saitama (JP); Hijikata, Makoto, Yamada Kawegoe-shi Saitama (JP)
(74) Representative: Viering, Jentschura & Partner

(57) **Abstract**

An apparatus generates difference update data for navigation with respect to a plurality of road data for the navigation. Each of the plurality of road data indicates at least one of an existing road and a junction thereof in a preset road network. The difference update data includes one road data for the navigation. The one road data indicates at least one of a new road and a junction thereof and is updated versus the plurality of road data as a standard. The apparatus is provided with: a first generating device (20) for generating the difference update data such that the difference update data includes, in addition to the one road data, same road data which is same as another road data indicating at least one of the existing road and the junction thereof that are connected to the new road or the junction thereof among the plurality of road data; and a second generating device (20) for generating merge data defining a relationship between the difference update data and the plurality of road data, such that the merge data includes a delete flag to delete said another road data from the plurality of road data on a predetermined process for the navigation.

## Description

### BACKGROUND OF THE INVENTION

### 1. Field of the invention

The present invention relates to an apparatus for and a method of generating difference update data for a navigation purpose including an on-vehicle navigation purpose, a navigation apparatus and method, a difference update data set for a navigation purpose, and a computer program.

### 2. Description of the Related Art

Navigation apparatuses, particularly on-vehicle navigation apparatuses, are now becoming increasingly common under rapid-paced development. A navigation apparatus displays a current position of a navigation object, for example a current position of a car on which the navigation apparatus is mounted, on a display device, such as a display screen, and provides various functions including route guidance and the like, by means of map data stored in a CD-ROM or DVD-ROM. With regard to a way of obtaining the current position of the object, typically used is either one or both of (i) a stand-alone type (i.e., a built-in, self-sustained or dead-recognizing type) navigation system in which the current position of the object is measured only using information from sensors that are mounted on the navigation object to detect various parameters such as velocity, azimuth and the like and (ii) a navigation system with a navigation aid system using a GPS (Global Positioning System) in which the current position is obtained by receiving measurement data transmitted from a plurality of satellites.

On the other hand, a KIWI-format is proposed as a common format of map data used for the on-vehicle navigation apparatus. This KIWI-format is proposed by navigation makers at home and abroad so as to provide map data independently of application software. That is, the format is constructed so as to be applied to various kinds of navigation apparatus, regarding versatility and extensibility. The KIWI-format or other format having the same idea as the KIWI-format is in widespread use among the map data used for the navigation apparatus.

On the other hand, there is proposed a technique to use map data in which the latest road data is reflected by updating the map data with difference data (e.g., as disclosed in Japanese Patent Application Laid-Open No. 2001-229369). Herein the "difference data" in the map data means a part of data (map data portion) different between a state of map data before updating and another state of map data after updating. In this technique, a state of map data that is generated at a predetermined time point is assumed to be original data, while difference data representing a change in real road conditions from the time point of generating the original data is independently generated. In the case that the map data is actually used, the change in the road conditions represented by the difference data is reflected into the original data. It is considered that the map data reflecting the latest road conditions can be obtained and utilized relatively efficiently by using the difference data.

Nevertheless, the difference data at present has such a data structure that it enforces, on the on-vehicle navigation apparatus, searching the entire difference data for appropriate difference data with respect to the original data, and thereby using only the searched difference data. Thereby, a heavy task is imposed on the on-vehicle navigation apparatus to reflect the difference data, causing a technical problem of reduction in a processing speed of the on-vehicle navigation apparatus as a whole, or another problem of requiring an expensive processing device for a higher-speed processing.

Additionally, merging a form of data with the road data to reflect the difference data as mentioned above may cause a deviation in size, format or arrangement of data in the KIWI-format or the like. Therefore, technical problems arise, including a problem that the navigation apparatus reduces its processing speed, and a problem that the navigation apparatus fails completely or partly to recognize, as normal map data, the map data with a deviation or disorder due to the reflection of the difference data.

### SUMMARY OF THE INVENTION

The present invention has been accomplished in view of the above problems for example. It is therefore an object of the present invention to provide an apparatus for and a method of generating difference data, capable of making access efficiently to the difference data and capable of reflecting the difference data into an existing map data (i.e., road data) without changing an interpretation of an existing format of the road data, to provide an on-vehicle navigation apparatus for and method of performing a predetermined navigation processing in an efficient and appropriate manner by means of the difference data, to provide the difference data, and to provide a computer program for serving a computer as such an apparatus for generating the difference data or the on-vehicle navigation apparatus.

The above object of the present invention can be achieved by an apparatus for generating difference update data for navigation with respect to a plurality of road data for the navigation, the plurality of road data being based on a predetermined format and each indicating at least one of an existing road and a junction thereof in a preset road network, the difference update data including one road data for the navigation, the one road data indicating at least one of a new road and a junction thereof and being updated versus the plurality of road data as a standard. The apparatus is provided with: a first generating device for generating the difference update data such that the difference update data includes, in addition to the one road data, same road data which is same as another road data indicating at least one of the existing road and the junction thereof that are connected to the new road or the junction thereof among the plurality of road data; and a second generating device for generating merge data defining a relationship between the difference update data and the plurality of road data for each road or each junction thereof, such that the merge data includes a delete flag to delete said another road data from the plurality of road data on a predetermined process for the navigation, in case that the first generating device generates the difference update data.

According to the apparatus for generating the difference update data, the apparatus may be equipped at a business site of a navigation maker, a map data distributor, a map supplier or others who supply the difference update data to update the map data, which is already presented. On its operation, firstly, the first generating device such as a microcomputer generates the difference update data if the map is required to be updated. If the first generating device generates the difference update data, the second generating device such as a microcomputer generates the merge data. Particularly, the first generating device generates the difference update data so as to include, in addition to the one road data, the same road data which is same as said another road data indicating at least one of the existing road and the junction thereof that are connected to the new road or the junction thereof from among the plurality of road data that conforms with a predetermined format such as a KIWI-format. On the other hand, the second generating device generates the merge data so as to include the delete flag to delete said another road data from the plurality of road data for the predetermined processing for the navigation. Incidentally, the "predetermined processing for the navigation" may be an optimal route searching, a route guiding, a route map displaying, a current position displaying or the like. In turn, the "navigation" herein means typically "a navigation for a vehicle" or "an on-vehicle navigation", which is not restrictive however, insofar as the navigation is based on the road data.

The difference update data includes the same road data, which is same as said another road data. Therefore, in the navigation apparatus for performing the predetermined processing for the navigation on the basis of the plurality of road data and the difference update data, no problem arises for and during the predetermined processing for the navigation, owing to a usage of the same road data in the difference update data instead of said another road data, even if said another road data is deleted on the predetermined processing for the navigation on the basis of the delete flag from the plurality of road data conforming with the predetermined format. Conversely, the relationship between the new road and said another road that is connected to the new road can be appropriately defined, owing to the new road data and the same road data which is same as said another road data, without any restriction or limitation from the predetermined format (e.g. a limitation not to change the data size in the predetermined format). Therefore, according to the present invention, even if a new road is added, the predetermined processing for the navigation can be achieved in an appropriate and advantageous manner as mentioned below, using the plurality of road data and the difference update data, which includes new road data and the same road data and is associated with the plurality of road data via the merge data, while maintaining the predetermined processing for the navigation of the plurality of road data, i.e. without changing the interpretation of the existing format or changing the data size of the predetermined format.

More specifically, now assume that a new road is added to a road network, which is represented by the road data generated on the basis of a time point (hereinafter referred to as an "original data", if necessary), and which corresponds to the "plurality of road data" according to the present invention. In this case, the difference update data is generated by the first generating device, for example including new road data indicating the added road or the junction thereof, and further including the same road data which is same as another road data indicating the existing road or the junction thereof to be connected to the added road. For example, the difference update data may be generated including link data indicating a link that corresponds to the road, or node data indicating a node that corresponds to the junction of the road. The road or the junction thereof herein includes address information indicating a jump address of a destination to be subsequently accessed in the predetermined processing for the navigation (i.e. address information of the road or junction to be subsequently accessed). The difference update data may be generated by updating the address information in such a manner that an access is appropriately established between the road or the junction thereof in the difference update data and the road or the junction thereof in the original data. For example, the address information may be updated such that junctions with which one intersection is formed are accessed sequentially or consecutively in the predetermined navigation processing. The "junctions with which one intersection is formed" herein means that a sequential or consecutive access among the junctions based on the jump address forms a loop.

On the other hand, along with the difference update data, the merge data, which indicates a relationship between the difference update data and the original data, is generated by the second generating device. For example, the merge data may be generated so as to include a delete flag to delete the existing road or the junction thereof in the difference update data from the original data for the processing. For example, the delete flag may be obtained by adding certain address information to the merge data, the address information indicating a predetermined empty area, so that the delete flag is recorded into the predetermined empty area, which exists in a predetermined format of the original data. Moreover, the merge data may be generated so as to include an update flag capable of updating an attribute flag in the original data indicating whether the road or the junction thereof to be subsequently accessed is included in the original data or included in the difference update data. Furthermore, the merge data may be generated so as to include address information capable of updating the jump address of said another junction that forms the same intersection together with the junction to be deleted. The address information includes address information allowing the junctions with which an intersection is formed to be accessed sequentially or consecutively in the predetermined processing for the navigation. Furthermore, each of the delete flag, the update flag and the address information may include size information or offset information indicating a predetermined position at which each of them is recorded into the original data.

Alternatively, now assume that a road is deleted from the original data. In this case, the merge data may be generated by the second generating device, including a delete flag to delete the road or the junction thereof from the original data for the processing. Furthermore, the merge data may include address information capable of updating a jump address of said another junction that forms an intersection together with the junction to be deleted. The updatable address information is set in such a manner that roads or junctions in the original data other than the deleted road or the junction thereof are accessed sequentially or to form an intersection, without making access to the deleted road or the junction thereof.

Alternatively, now assume that a road in the original data is changed in its road type. In this case, the merge data is generated by the second generating device, including an update flag that is described with a predetermined kind of code corresponding to the road type information for indicating the road type such as a national road, a prefectural road or the like, and that is for updating directly a predetermined part of the original data. Incidentally, for example, information described with the predetermined kind of code may be regulation information indicating information such as one-way traffic or the like, signal information indicating an existence or inexistence of the signal in each intersection or other information.

Using the difference update data or the merge data generated as mentioned above for the navigation apparatus for example mentioned below, the predetermined processing for the navigation can be performed while allowing an efficient access to the difference update data, without changing the interpretation of the existing format. That is, for example, it is possible to reflect the difference update data, only with writing or over-writing the information of the merge data into a predetermined empty area or predetermined part of the original data in the predetermined processing for the navigation, without changing the interpretation of the predetermined format. Alternatively, using the information of the attribute flag, it is possible to make access to the difference update data in the predetermined navigation processing, only in the case that the access to the difference update data is necessary. Incidentally, herein the data obtained by reflecting the difference update data into the original data is referred to as an "updated data" (i.e., an re-written or update-finished data) as appropriate.

Consequently, according to the apparatus for generating the difference update data of this embodiment, the difference update data and the merge data can be generated, which allow the efficient access to the difference update data to perform the predetermined processing for the navigation, without changing the interpretation of the format of the original data.

In an aspect of the apparatus for generating the difference update data for navigation of the present invention, the plurality of road data has an empty area on the predetermined format for said each road or said each junction thereof, and the merge data includes address information for indicating the empty area for said each road or said each junction.

According to this aspect, for example, the merge data can be generated in such a manner that the delete flag in the merge data is recorded into a predetermined empty area from among the empty areas that exist in the format of the original data. The empty area is recognized as those having a predetermined meaning (e.g., a deletion of road) depending on the position of the empty area in the predetermined processing for the navigation. That is, for example in the predetermined processing for the navigation in the navigation apparatus mentioned below, the deleted flag can be recorded into the predetermined empty area of the original data, which is designated by the address information added to the merge data, and can be given a meaning.

Thereby, the difference update data or the merge data can be generated, without changing the interpretation of the format of the original data.

In another aspect of the apparatus for generating update data for navigation of the present invention, the apparatus further comprises a recording device for recording the difference update data generated by said first generating device and the merge data generated by said second generating device into a removal type recording medium.

According to this aspect, the difference update data or the merge data is arranged so as to be recorded into a removal type information recording medium including a downsized removal (i.e. portable or carriageable) recording medium such as an IC card, a re-writable optical information recording medium such as a flexible disk or a DVD-RAM, or a semiconductor memory such as a DRAM. Thereby, the map supplier, navigation maker or others can easily distribute the removal type recording medium to an owner or others of the navigation apparatus mentioned below via mail, courier or the like.

In another aspect of the apparatus for generating the difference update data for navigation of the present invention, the apparatus further comprises a communicating device for transferring the difference update data generated by said first generating device and the merge data generated by said second generating device via a communication network.

According to this aspect, for example, the map supplier, the navigation maker or others can easily distribute via the communication network the latest set of the difference update data and the merge data to the owner or others of the navigation apparatus mentioned below.

The communication network herein may be, regardless of wired or wireless, an open network opened to the public such as Internet, otherwise a close network such as a private line or a leased line, which only an authorized person can use. Furthermore, the communicating device may include a transceiver or the like and may be a cell phone or the like.

Incidentally, the difference update data or the merge data may be transferred automatically with the communicating device at regular or irregular intervals, or may be transferred in response to a distribution request from the owner or others of the navigation apparatus mentioned below. In any case, if the difference update data and the merge data are not updated, otherwise if the latest version of the difference update data and the merge data is distributed or delivered already to the navigation apparatus, such a data transmission is not necessary.

In another aspect of the apparatus for generating the difference update data for navigation of the present invention, each of the plurality of road data and the one road data includes: link data for indicating a link that is representative of the road; and node data for indicating a node that is representative of the junction.

According to this aspect, the information of the road data may be configured so as to include (i) the link data indicating the "link" that is defined as a line or linkage between two nodes, represented by the road or the like, and (ii) the node data indicating the "node" that is defined as a predetermined point on the map such as an intersection. Thereby, the difference update data and the merge data can be generated, with focusing on especially the two objects to be processed (i.e. node and link). That is, the road data can be handled or processed relatively easily in the apparatus for generating update data. Therefore, the difference update data or the merge data can be generated relatively easily.

Incidentally, the link data may include information about the link itself (i.e. road type information, regulation information or the like), in addition to the information for indicating the linkage between two nodes.

In an aspect of the road data that includes the link data and the node data as mentioned above, the predetermined processing for the navigation processing may include a process of making access sequentially to the plurality of road data and the difference update data in such a manner that the link that is connected to the node is tracked.

In this arrangement, a route between a predetermined point and another predetermined point on the road data may be indicated by a plurality of units that is in turn made of a node and another node to be accessed next to the former and a link therebetween. Therefore, even in the case that a link or node is added to the original data, the added link or node can be reflected into the original data, owing to the arrangement in which the added link or node and the existing link or node are alternately accessed. Thereby, the apparatus for generating the difference update data can generate relatively easily the difference update data or the merge data.

The format of the map data according to this aspect may be the aforementioned KIWI-format.

In another aspect of the apparatus for generating the difference update data for navigation of the present invention, the plurality of road data includes, for said each road data or said each junction: address information indicating a jump address of a destination to be subsequently accessed for the predetermined processing for the navigation; and an attribute flag indicating whether the destination is included in the plurality of road data or in the difference update data.

According to this aspect, the address information indicating the jump address allows the association or correlation of node or link (i.e. an access sequence designated by the jump address) to be presented relatively easily. Therefore, the difference update data and the merge data can be generated relatively easily.

Furthermore, if the added new link or node is included in the difference update data for example, the merge data can be generated including an over-write flag or the like capable of over-writing the attribute flag. Thereby, in the predetermined processing for the navigation, it is possible to make access without discriminating between the original data and the difference update data. That is, if the attribute flag indicates that the link or node to be subsequently accessed is included in the difference update data for example, the predetermined processing for the navigation can be performed by means of the difference update data. On the other hand, if the attribute flag indicates that the link or node to be subsequently accessed is not included in the difference update data, the predetermined processing for the navigation can be performed only by means of the original data without making access to the difference update data. That is, it is possible to generate the merge data with which the predetermined processing for the navigation capable of efficiently making access to the difference update data is performed.

In another aspect of the apparatus for generating the difference update data for navigation of the present invention, the merge data includes: offset information indicating an offset of the difference update data corresponding to the merge data with respect to an address of the plurality of road data; and size information indicating data size of the difference update data corresponding to the merge data.

According to this aspect, the merge data includes, in addition to the information defining the relationship between the original data and the difference update data (e.g. an over-write flag to over-write the attribute flag etc.) and the information to be recorded into the original data (i.e. address information etc.), the size information and the offset information defining a position at which the former two kinds of information is recorded into the original data. The offset information defines an address at which the merge data is recorded into the original data and also defines how far the address is from a head address of a processing unit of the original data (e.g., a node unit, a link unit or a parcel unit). The size information defines size of the merge data to be recorded into the original data. Thereby, it is possible to generate the merge data that facilitates recognition about the address or the size in the original data to be updated.

In another aspect of the apparatus for generating the difference update of the present invention, the second generating device generates the merge data with respect to a data portion in the plurality of road data described by use of multiple kinds of preset code, such that the merge data includes an update flag to directly update the multiple kinds of preset code with the merge data corresponding thereto on the predetermined processing for the navigation.

According to this aspect, in the predetermined processing for the navigation, owing to updating the predetermined multiple kinds of code in the original data directly with the update flag, the updated road conditions can be reflected into the original data, without changing the interpretation of the format of the original data. Incidentally, the update flag may include the predetermined multiple kinds of code in the original data.

Thereby, it is possible to generate the merge data without changing the interpretation of the format of the original data.

Incidentally, the data to be described with the multiple kinds of code may be the road type information indicating the road type such as a national road, a prefectural road or the like, the regulation information for indicating the information such as one-way traffic or the like, the signal information for indicating the existence or inexistence of a signal in each intersection or other information.

The above object of the present invention can be also achieved by a method of generating difference update data for navigation with respect to a plurality of road data for the navigation, the plurality of road data being based on a predetermined format and each indicating at least one of an existing road and a junction thereof in a preset road network, the difference update data including one road data for the navigation, the one road data indicating at least one of a new road and a junction thereof and being updated versus the plurality of road data as a standard, said method provided with: a first generating process of generating the difference update data such that the difference update data includes, in addition to the one road data, same road data which is same as another road data indicating at least one of the existing road and the junction thereof that are connected to the new road or the junction thereof among the plurality of road data; and a second generating process of generating merge data defining a relationship between the difference update data and the plurality of road data for each road or each junction thereof, such that the merge data includes a delete flag to delete said another road data from the plurality of road data on a predetermined process for the navigation, in case that said first generating process generates the difference update data.

According to the method of generating the difference update data of the present invention, the difference update data or the merge data can be generated in a similar manner to the above-described apparatus for generating the difference update data of the present invention. Thereby, it is possible to generate the difference update data or the merge data with which the predetermined processing for the navigation capable of efficiently making access to the difference update data or the merge data is performed, without changing the interpretation of the format of the original data.

Incidentally, the method of generating the difference update data of the present invention may have various aspects, in a similar manner to the various aspects of the above-mentioned apparatus for generating the difference update data of the present invention.

The above object of the present invention can be also achieved by a first navigation apparatus provided with: a storing device for storing (i) a plurality of road data for navigation being based on a predetermined format and each indicating at least one of an existing road and a junction thereof in a preset road network, (ii) difference update data generated with respect to the plurality of road data and including one road data for the navigation and same road data, the one road data indicating at least one of a new road and a junction thereof and being updated versus the plurality of road data as a standard, the same road data being same as another road data indicating at least one of the existing road and the junction thereof that are connected to the new road or the junction thereof among the plurality of road data; and (iii) merge data defining a relationship between the difference update data and the plurality of road data for each road or each junction thereof, and including a delete flag to delete said another road data from the plurality of road data on a predetermined process for the navigation; a writing device for generating updated data based on the predetermined format and including the plurality of road data and the merge data, by writing the merge data merged to a predetermined portion of the plurality of road data; and a processing device for making access to the plurality of road data and the merge data in the updated data and deleting said another road data from the plurality of road data on the predetermined processing for the navigation in accordance with the delete flag that is included in the accessed merge data, for making access further to the difference update data the relationship of which is defined by the accessed merge data, and for performing the predetermined processing for the navigation on the basis of the accessed plurality of road data and the accessed difference update data.

According to the first navigation apparatus of the present invention, during its operation, a current position of the object is obtained, which may be indicated by the latitude or the longitude of the navigation object that is in turn calculated by means of a GPS. In addition to or instead of this, the current position of the object may be obtained from an acceleration, velocity, direction or the like of the object by means of an acceleration sensor, an angular velocity sensor, a velocity sensor or the like. Then, for example, the current position may be pointed out on the map, in association with the road data or the like for the navigation. On the other hand, the road data is stored in conformity with a predetermined format such as KIWI-format. Additionally, it is possible to perform a route searching for indicating a route from a point to another point on the map, by means of a route searching device that may be made of a microcomputer. Furthermore, it is possible to perform the predetermined processing for the navigation based on the latest road conditions, by reflecting the content of the difference update data for indicating the update condition or the like of the original information stored in the storing device. The storing device includes a read only optical information recording medium such as a CD-ROM, or a DVD-ROM, a re-writable optical information recording medium such as a CD-RAM, a DVD-RAM or a DVD-RW, a magnetic information recording medium such as a hard disk, a semiconductor memory such as a DRAM, or a removal type information recording medium such as a memory card, a memory stick or an IC card.

Particularly in this embodiment, for example, it is constructed such that the predetermined processing for the navigation is performed, by means of the difference update data and the merge data generated according to the aforementioned apparatus for generating the difference update data of the present invention. The merge data is for defining the relationship between the plurality of road data and the difference update data and includes the delete flag. The difference update data includes, in addition to the one road data for indicating the new road or the junction thereof, the same road data which is same as said another road data for indicating the existing road or the junction thereof that is connected to the new road or the junction thereof. In this case, the writing device records the delete flag that is included in the merge data into a predetermined part (e.g. a predetermined empty area of the original data) of the plurality of road data (i.e. the aforementioned original data), to generate the updated data instead of or in addition to the original data. Relating to this, the relationship between the original data and the difference update data, which is defined by the merge data, may be also recorded. The merge data is recorded into a predetermined part of the original data by which the format is unaffected, to conform with the predetermined format of the original data. Thereby, the updated data generated by the writing device conforms with the predetermined format.

Then, the processing device including a microcomputer or the like recognizes that said another road data is to be deleted from the original data on the processing, by making access to the delete flag that is included in the updated data already generated. In this case, even if said another road data is deleted from the original data on the processing, the processing device allows the predetermined processing for the navigation to be performed in a similar manner by making access to the same road data the same as said another road data that is included in the difference update data. Furthermore, a new relationship between the same road data and the one road data is appropriately defined in the difference update data in advance, without a restriction or limitation (e.g. a limitation not to change data size in the predetermined format) based on the predetermined format of the original data. Therefore, even if the new road is added, the appropriate and predetermined processing for the navigation conforming with the predetermined format is allowed, as follows, by making access to the difference update data or the delete flag that is included in the merge data, without changing the interpretation of the predetermined format of the original data.

More specifically, for example, now assume that the predetermined processing for the navigation is performed, by means of the merge data and the difference update data that includes one road data for indicating the added road (i.e., the new road) and the junction thereof. In this case, for example, assume that the difference update data and the merge data is used, these data being generated according to the aforementioned apparatus for generating the difference update data of the present invention. Firstly, the writing device records the merge data into a predetermined data part or an empty area of the original data to generate the updated data. For example, the delete flag may be recorded into the predetermined empty area of the original data, the over-write flag may over-write an attribute flag that is included in the original data, and the address information may over-write the jump address information of a predetermined road or a junction thereof in the original data. Therefore, the information or the like of the merge data can be reflected into the original data, by recording the merge data into the empty area or the predetermined data part, without changing the interpretation of the format of the original data.

On the other hand, the processing device recognizes that said another road or the junction thereof to which the added road is connected is to be deleted from the original data for the processing, by reading the delete flag. Said "another road data" relating to another road or junction thereof to be deleted for the processing is included as the "same road data" in the difference update data. The relationship between the one road data and the same road data in the difference update data is appropriately defined in the difference update data, regardless of the limitation on the format of the original data. Thereby, a change in the road conditions, i.e. an addition of a road, can be reflected into the original data, without changing the interpretation of the format of the original data.

Furthermore, the processing device recognizes that the one road data is included in the difference update data, by making access to the attribute flag over-written by the over-write flag. That is, in the predetermined processing for the navigation, it is possible for the processing device to make access without discriminating between the original data and the difference update data.

Consequently, even if the difference update data or the merge data is reflected into the original data, it is possible to perform the predetermined processing for the navigation, without changing the interpretation of the format of the original data.

Additionally, by reading the attribute flag, it is possible to make access to the difference update data, only in the case that an access to the difference update data is required. On the other hand, even if the road or junction to be accessed is included in the difference update data, by re-writing or changing the jump address information to an address information of the road or junction in the difference update data, the road or junction in the difference update data can be easily accessed. Thereby, an efficient access to the road or junction in the difference update data is achieved.

Alternatively, for example, assume that the predetermined processing for the navigation is performed by means of the merge data and the difference update data including the information about the deleted road. In this case, the writing device records the delete flag that is included in the merge data into for example a predetermined empty area of the original data, and over-writes or updates the jump address of a junction, forming the same intersection together with the deleted road, with the address information included in the merge data. Thereby, the updated data (i.e., the over-written or re-written data) is generated. Then, the processing device reads the delete flag to recognize that the road is deleted. On the other hand, even if a road is deleted, it is possible to make access sequentially to another road or junction, since the jump address of the junction is over-written.

Alternatively, for example, assume that a road type of a road is changed. In this case, the writing device over-writes or updates a predetermined part of the original data on the basis of the update flag that is included in the merge data to thereby generate the updated data. The processing device reads a code (i.e. the update flag) of the predetermined part that is over-written to thereby perform the usual predetermined processing for the navigation.

Thus, according to the first navigation apparatus of the present invention, by using the difference update data or recording the merge data into the original data, it is possible to perform the predetermined process for the navigation, allowing an efficient access to the difference update data, without changing the interpretation of the format of the original data.

Incidentally, the updated data may be generated for each predetermined processing for the navigation, or may be generated for an entire original data.

Incidentally, the merge data or the difference update data used for the navigation apparatus is not limited to the data generated by the aforementioned apparatus for generating the difference update data, but may be another data generated from a same concept. Even in this case, it is possible to perform the predetermined processing for the navigation, allowing an efficient search or retrieval of the difference update data, without changing the interpretation of the format of the original data.

The above object of the present invention can be also achieved by a second navigation apparatus provided with: a communicating device for receiving, via a communication network, at least one of (i) a plurality of road data for navigation being based on a predetermined format and each indicating at least one of an existing road and a junction thereof in a preset road network, (ii) difference update data generated with respect to the plurality of road data and including one road data for the navigation and same road data, the one road data indicating at least one of a new road and a junction thereof and being updated versus the plurality of road data as a standard, the same road data being same as another road data indicating at least one of the existing road and the junction thereof that are connected to the new road or the junction thereof among the plurality of road data; and (iii) merge data defining a relationship between the difference update data and the plurality of road data for each road or each junction thereof, and including a delete flag to delete said another road data from the plurality of road data on a predetermined process for the navigation; a storing device for storing some of the plurality of road data, the difference update data and the merge data other than at least one to be received by the communicating device; a writing device for generating updated data based on the predetermined format and including the plurality of road data and the merge data, by writing the merge data merged to a predetermined portion of the plurality of road data; and a processing device for making access to the plurality of road data and the merge data in the updated data and deleting said another road data from the plurality of road data on the predetermined processing for the navigation in accordance with the delete flag that is included in the accessed merge data, for making access further to the difference update data the relationship of which is defined by the accessed merge data, and for performing the predetermined processing for the navigation on the basis of the accessed plurality of road data and the accessed difference update data.

According to the second navigation apparatus of the present invention, the fundamental operation (i.e. the predetermined processing for the navigation including an optimal route searching, a current position displaying or the like) is performed in a similar manner to that of the above described first navigation apparatus of the present invention. Further, in a similar manner to the first navigation apparatus of the present invention, update conditions or the like of the road in the merge data or the difference update data can be reflected into the original data to thereby perform the predetermined processing for the navigation, without changing the interpretation of the format of the original data.

Particularly in this second navigation apparatus, it is constructed in such a manner that at least one of the plurality of road data (i.e. the original data), the difference update data and the merge data can be received, by means of a communicating device including a transceiver or a cell phone, via a wired or wireless communication network. Thereby, for example, the user of the navigation apparatus can relatively easily receive the merge data, the difference update data or the original data that is distributed by the map supplier, the navigation maker or others via Internet or the like. Incidentally, data, other than the aforementioned data to be received at the communicating device is stored in the storing device. The storing device may include a read only optical information recording medium such as a CD-ROM or a DVD-ROM, a re-writable optical information recording medium such as a CD-RAM, a DVD-RAM or a DVD-RW, a magnetic information recording medium such as a hard disk, a semiconductor memory such as a DRAM, or a removal type information recording medium such as a memory card, a memory stick or an IC card.

For example, the case that only the difference update data is received while the original data and the merge data are stored in the storing device will be discussed hereinbelow. In this case, the processing device reads the content of the merge data and then transmits a data distribution request, if the difference update data is required, on the basis of a relationship between the original data and the difference update data defined by the merge data. The data distribution request is sent to the map supplier, the navigation maker or others via Internet or the like. As a result, the difference update data as required is received. The processing device allows the predetermined processing for the navigation as discussed about the above described first navigation apparatus, by making access to the received difference update data. On the other hand, if the difference update data is not required, it is possible to perform the efficient predetermined processing for the navigation only with making access to the original data and the merge data that are stored in the storing device, without sending the data distribution request. Alternatively, it is possible to perform the efficient predetermined processing for the navigation, by receiving a parcel of difference update data that may represent a current position or the like from among the original data, prior to the predetermined processing for the navigation.

Alternatively, in any aspect or scheme of receiving the difference update data and the merge data, the latest set of the merge data and difference update data including the latest map information or the like can be readily received. Therefore, an environment to efficiently make access to the difference update data is readily achieved by means of the merge data.

Alternatively, in any aspect or scheme of receiving the original data, a reduction in a storage capacity can be achieved, as a result from eliminating a necessity for the navigation apparatus to store a great volume of original data.

In any aspect or scheme, an efficient predetermined processing for the navigation can be achieved, by receiving the original data, the difference update data or the merge data through the communicating device via the communication network.

Alternatively, the original data, the difference update data or the merge data, which is already received, may be stored into the storing device. Thereby, an access frequency or times to the communication network by the communicating device can be reduced, and thereby the processing speed of the navigation apparatus can be improved.

Incidentally, the original data, the difference update data or the merge data may be received on the basis of a required amount of data, or may be received altogether at one time. Alternatively, the original data, which is the most frequently usable data, may be received in its entirety in advance, and the difference update data and the merge data may be received via the communication network, for a saving in time to receive the data. Thereby, the efficient predetermined processing for the navigation can be achieved.

In an aspect of the first or second navigation apparatus of the present invention, each of the plurality of road data and the one road data includes: link data for indicating a link that is representative of the road; and node data for indicating a node that is representative of the junction, and the predetermined processing for the navigation includes a process of making access sequentially to the plurality of road data and the difference update data in such a manner that the link that is connected to the node is tracked.

According to this aspect, the information constituting the road data includes (i) the link data indicating the "link" that is defined as a line or linkage between two nodes representing the road or the like, and (ii) the node data indicating the "node" that is defined as a predetermined point (i.e. a junction) on the map including an intersection or the like. On the other hand, a route between a predetermined point and another point on the map may be indicated by a plurality of units, each of which is made of a node and another node to be accessed next to the former and a link therebetween. Thereby, the predetermined processing for the navigation can be performed, with focusing on especially the two objects to be processed (i.e. node and link), and making access sequentially to a plurality of nodes and links. That is, it is possible for the navigation apparatus to perform relatively easily the predetermined processing for the navigation including an optimal route searching, a current position displaying and so on.

Particularly, setting the processing unit of the predetermined processing for the navigation on a node basis (i.e. node unit) or on a link basis (link unit) advantageously facilitates to perform an optimal route searching, a typical processing of the predetermined processing for the navigation. Therefore, using the merge data to be recorded into the empty area disposed on the node basis or on the link basis allows for reducing in an amount of batch data. Thereby, the duty on the navigation apparatus can be reduced to improve the processing speed.

Incidentally, the link data may include another kind of information about the link itself (i.e. road conditions including road type information, regulation information, or the like), in addition to the information indicating the relationship between two nodes.

The format of the map data according to this aspect may be the aforementioned KIWI-format.

In another aspect of the first or second navigation apparatus of the present invention, the plurality of road data includes, for said each road data or said each junction: address information indicating a jump address to be subsequently accessed for the predetermined processing for the navigation; and an attribute flag indicating whether the jump address is included in the plurality of road data or in the difference update data.

According to this aspect, the address information indicating the jump address facilitates to represent an association or relationship among the links or the nodes (i.e. the access sequence or order designated by the jump address). Furthermore, an access to the attribute flag by the processing device facilitates to judge whether the destination is included in the original data or included in the difference update data. That is, if the attribute flag is not included, there is a need to search all of the difference update data for a node or link, since it is unknown whether or not the node or link in the difference update data is of necessary at the time. In view of this, the present invention allows, owing to the existence of the attribute flag, the judgement whether or not the link or node in the difference update data is of necessary at the time, and thereby allows the processing device to make access to the difference update data only in the case that the link or node in the difference update data is of necessary at the time. Thereby, a wasteful access to the difference update data is eliminated, and then the predetermined processing for the navigation can be efficiently performed.

In another aspect of the first or second navigation apparatus of the present invention, the merge data includes, with respect to a data portion in the plurality of road data described by use of multiple kinds of preset code, an update flag to directly update the multiple kinds of preset code with the difference update data corresponding thereto on the predetermined processing for the navigation,.

According to this aspect, the writing device can update directly the data part of the original data described with the predetermined multiple kinds of code with the content of the update flag. Thereby, updating the data portion with the predetermined code that is preset in the original data facilitates to reflect the updated road conditions into the original data, without changing the interpretation of the format of the original data.

Incidentally, the multiple kinds of code that are preset in the original data may include road type information indicating a road type such as a national road, a prefectural road or the like, regulation information indicating information such as one-way traffic and so on, signal information indicating an existence or inexistence of a signal in each intersection, or other information.

The above object of the present invention can be also achieved by a first navigation method provided with: a storing process of storing (i) a plurality of road data for navigation being based on a predetermined format and each indicating at least one of an existing road and a junction thereof in a preset road network, (ii) difference update data generated with respect to the plurality of road data and including one road data for the navigation and same road data, the one road data indicating at least one of a new road and a junction thereof and being updated versus the plurality of road data as a standard, the same road data being same as another road data indicating at least one of the existing road and the junction thereof that are connected to the new road or the junction thereof among the plurality of road data; and (iii) merge data defining a relationship between the difference update data and the plurality of road data for each road or each junction thereof, and including a delete flag to delete said another road data from the plurality of road data on a predetermined process for the navigation; a writing process of generating updated data based on the predetermined format and including the plurality of road data and the merge data, by writing the merge data merged to a predetermined portion of the plurality of road data; and a processing process of making access to the plurality of road data and the merge data in the updated data and deleting said another road data from the plurality of road data on the predetermined processing for the navigation in accordance with the delete flag that is included in the accessed merge data, for making access further to the difference update data the relationship of which is defined by the accessed merge data, and for performing the predetermined processing for the navigation on the basis of the accessed plurality of road data and the accessed difference update data.

According to the first navigation method of the present invention, similarly to the aforementioned first navigation apparatus of the present invention, the predetermined processing for the navigation can be performed by means of the difference update data and the merge data generated according to the aforementioned apparatus for generating the difference update data of the present invention.

Therefore, using the difference update data or recording the merge data into the original data allows the efficient access to the difference update data for the predetermined processing for the navigation, without changing the interpretation of the format of the original data.

Incidentally, the first navigation method also has various aspects, corresponding to various aspects of the aforementioned first navigation apparatus of the present invention.

The above object of the present invention can be also achieved by a second navigation apparatus provided with: a communicating process of receiving, via a communication network, at least one of (i) a plurality of road data for navigation being based on a predetermined format and each indicating at least one of an existing road and a junction thereof in a preset road network, (ii) difference update data generated with respect to the plurality of road data and including one road data for the navigation and same road data, the one road data indicating at least one of a new road and a junction thereof and being updated versus the plurality of road data as a standard, the same road data being same as another road data indicating at least one of the existing road and the junction thereof that are connected to the new road or the junction thereof among the plurality of road data; and (iii) merge data defining a relationship between the difference update data and the plurality of road data for each road or each junction thereof, and including a delete flag to delete said another road data from the plurality of road data on a predetermined process for the navigation; a storing process of storing some of the plurality of road data, the difference update data and the merge data other than at least one to be received by said communicating process; a writing process of generating updated data based on the predetermined format and including the plurality of road data and the merge data, by writing the merge data merged to a predetermined portion of the plurality of road data; and a processing process of making access to the plurality of road data and the merge data in the updated data and deleting said another road data from the plurality of road data on the predetermined processing for the navigation in accordance with the delete flag that is included in the accessed merge data, for making access further to the difference update data the relationship of which is defined by the accessed merge data, and for performing the predetermined processing for the navigation on the basis of the accessed plurality of road data and the accessed difference update data.

According to the second navigation method of the present invention, similarly to the aforementioned second navigation apparatus of the present invention, the predetermined processing for the navigation can be performed by means of the difference update data and the merge data generated according to the apparatus for generating the difference update data of the present invention mentioned above. Furthermore, at least one of the original data, the difference update data and the merge data can be received efficiently via the communicating network.

Thereby, the efficient access to the difference update data can be achieved for the predetermined processing for the navigation, without changing the interpretation of the format of the original data.

Incidentally, the second navigation method of the present invention also has various aspects, corresponding to various aspects of the second navigation apparatus of the present invention mentioned above.

The above object of the present invention can be also achieved by a difference update data set provided with: difference update data for navigation; and merge data in combination. The difference update data is provided with (i) one road data for the navigation generated with respect to a plurality of road data for navigation, the plurality of road data being based on a predetermined format and each indicating at least one of an existing road and a junction thereof in a preset road network, the one road data indicating at least one of a new road and a junction thereof and being updated versus the plurality of road data as a standard and (ii) same road data being same as another road data indicating at least one of the existing road and the junction thereof that are connected to the new road or the junction thereof among the plurality of road data. The merge data defines a relationship between the difference update data and the plurality of road data for each road or each junction thereof, and includes a delete flag to delete said another road data from the plurality of road data on a predetermined process for the navigation.

According to the difference update data set of the present invention, similarly to the merge data and the difference update data generated by the aforementioned apparatus for generating the difference update data of the present invention, the data set is used for the predetermined processing for the navigation to allow the efficient access to them, without changing the interpretation of the format of the original data.

Incidentally, the difference update data set of the present invention also has various aspects, corresponding to various aspects of the apparatus for generating the difference update data of the present invention mentioned above.

The above object of the present invention can be also achieved by a first computer program for tangibly embodying a program of instructions executable by a computer to make the computer function as the aforementioned apparatus for generating the difference update data (i.e., function as at least one portion of the first and second generating devices) of the present invention.

According to the first computer program of the present invention, the aforementioned apparatus for generating the difference update data can be implemented relatively readily, by reading the computer program from a recording medium such as a ROM, a CD-ROM, a DVD-ROM or a hard disk, in which the computer program is recorded, loading it into the computer and running it, or by downloading the computer program into the computer via a communicating device and running it.

Incidentally, the first computer program of the present invention also has various aspects, corresponding to various aspects of the aforementioned apparatus for generating the difference update data of the present invention.

The above object of the present invention can be also achieved by a second computer program for tangibly embodying a program of instructions executable by a computer to make the computer function as the aforementioned first or second navigation apparatus (i.e., function as at least one portion of the processing device and the writing device) of the present invention.

According to the second computer program of the present invention, the aforementioned first or second navigation apparatus can be implemented relatively readily, by reading the computer program from a recording medium such as a ROM, a CD-ROM, a DVD-ROM or a hard disk, in which the computer program is recorded, loading it into the computer and running it, or by downloading the computer program into the computer via a communicating device and running it.

Incidentally, the second computer program of the present invention also has various aspects, corresponding to various aspects of the aforementioned first or second navigation apparatus of the present invention.

The aforementioned effect and other advantages in the embodiment will now be more apparent from the following examples.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a block diagram illustrating a fundamental construction of a navigation apparatus according to an embodiment of the present invention.
FIG. 2(a) and FIG. 2(b) are schematic views illustrating a processing unit of the original data as the road data used for the navigation apparatus according to the present embodiment.
FIG. 3 is a conceptual view illustrating an exemplary predetermined intersection used for a predetermined navigation processing by the navigation apparatus according to the embodiment of the present invention.
FIG. 4 is a conceptual view illustrating a data structure of an original data representing the predetermined intersection according to the embodiment of the present invention.
FIG. 5 is a conceptual view illustrating another exemplary predetermined intersection used for the predetermined navigation processing by the navigation apparatus according to the embodiment of the present invention.
FIG. 6 is a conceptual view illustrating a data structure of original data and merge data representing the predetermined intersection according to the embodiment of the present invention.
FIG. 7 is a conceptual view illustrating a data structure of updated data and difference update data representing the predetermined intersection according to the embodiment of the present invention.
FIG. 8 is a flow chart illustrating an operation of the predetermined navigation processing of the navigation apparatus according to the embodiment of the present invention.
FIG. 9 is a flow chart illustrating another operation of the predetermined navigation processing of the navigation apparatus according to the embodiment of the present invention.
FIG. 10 is a flow chart illustrating another operation of the predetermined navigation processing of the navigation apparatus according to the embodiment of the present invention.
FIG. 11 is a flow chart illustrating another operation of the predetermined navigation processing of the navigation apparatus according to the embodiment of the present invention.
FIG. 12 is a flow chart illustrating another operation of the predetermined navigation processing of the navigation apparatus according to the embodiment of the present invention.
FIG. 13 is a block diagram illustrating a fundamental structure of an apparatus for generating difference update data according to the embodiment of the present invention.
FIG. 14(a) and FIG. 14(b) are schematic views conceptually illustrating roads designated by the original data according to the embodiment of the present invention.
FIG. 15 is a schematic view conceptually illustrating a data structure of a merge data generated by the apparatus for generating difference update data according to the embodiment of the present invention.
FIG. 16 is a schematic view illustrating another data structure of a merge data generated by the apparatus for generating difference update data according to the embodiment.
FIG. 17 is a schematic view illustrating an exemplary recognition of predetermined roads, in the case that the merge data generated as such is used for the predetermined navigation processing.
FIG. 18 is a schematic view illustrating a specific example in which a road is added to a preset road network.
FIG. 19(a) and FIG. 19(b) are schematic views illustrating a data structure of the merge data and the difference update data generated by the apparatus for generating difference update data according to the embodiment.
FIG. 20(a) and FIG. 20(b) are schematic view illustrating an exemplary recognition of the preset road network, in the case that the difference update data and the merge data generated by the apparatus is used for the predetermined navigation processing.
FIG. 21 is a schematic view illustrating another specific example in which a road is added to another preset road network.
FIG. 22(a) and FIG. 22(b) are schematic views illustrating another data structure of the merge data and the difference update data generated by the apparatus for generating difference update data according to the embodiment.
FIG. 23 is a flow chart showing an operation of the apparatus for generating difference update data of this embodiment.

### DETAILED DESCRIPTION OF THE PREFERRED EMBODIMENTS

The embodiments of the navigation apparatus and method as well as the apparatus and method for generating the difference update data according to the present invention will now be discussed, with reference to drawings.

Incidentally, in the following embodiments, an exemplary "over-write flag" relating to the apparatus for generating the difference update data of the present invention is made of "flag information", while an exemplary "attribute flag" according to the present invention is made of "empty area 114", and further an exemplary "update flag" according to the present invention is made of "classification information 201".

### (Fundamental Construction of the Navigation Apparatus)

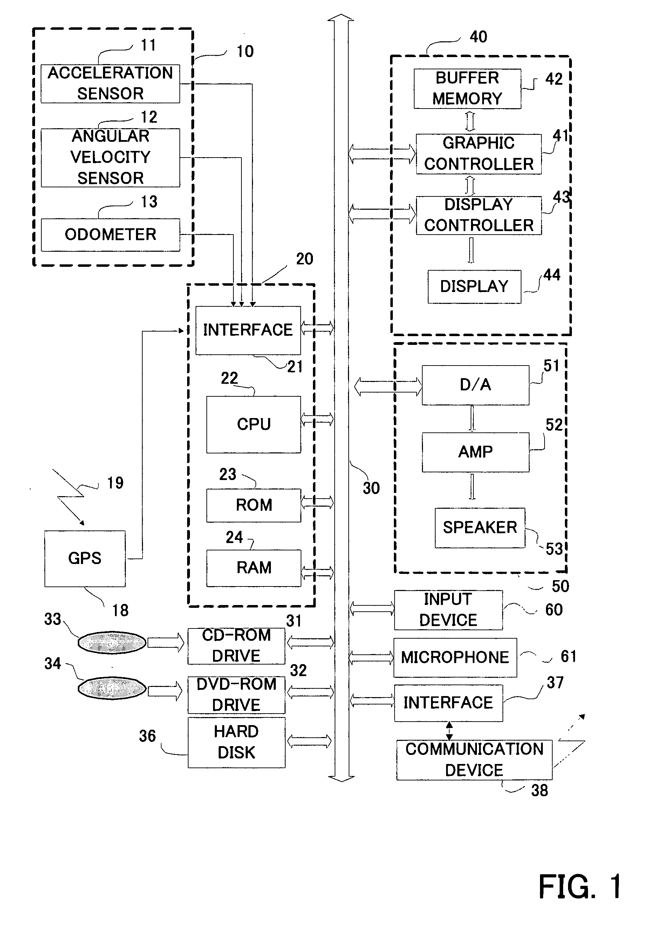

Firstly, with reference to FIG. 1, a fundamental construction of a navigation apparatus according to an embodiment of the present invention will now be discussed. FIG. 1 is a block diagram illustrating a construction of the navigation apparatus according to the embodiment of the present invention.

As shown in FIG. 1, the navigation apparatus is provided with a sensor unit 10, a GPS receiver unit 18, a control unit 20, a data bus 30, a CD-ROM drive 31, a DVD-ROM drive 32, a hard disk 36, a video output unit 40, an audio output unit 50, an input device 60, a microphone 61 and a communicating device 38.

The sensor unit 10 is for obtaining information about movement of an object to be navigated (may called as a "navigation object") and includes an acceleration sensor 11, an angular velocity sensor 12 and an odometer 13. The acceleration sensor 11 is for detecting acceleration of the object and capable of calculating the velocity from the detected acceleration. The angular velocity sensor 12 is for detecting an angular velocity of the object. The odometer 13 is for detecting a travel distance of the object.

The GPS receiver unit 18 is, for example with a receiver, capable of locating a current position of the navigation object by transmitting and receiving information to and from GPS satellites via a radio wave 19.

The control unit 20 is for controlling the navigation apparatus as a whole and includes an interface 21, a CPU 22, a ROM 23 and a RAM 24. The interface 21 is for transferring (transmitting and receiving) data between the sensor unit 10 and the GPS receiver unit 18 and for outputting the received data to the CPU 22. The CPU 22 is for locating the current position of the navigation object by means of data that is inputted through the interface 21. The CPU 22 is for controlling the navigation apparatus as a whole through a calculation processing. In this embodiment, particularly, the CPU 22 controls the CD-ROM drive 31, the DVD-ROM drive 32 or the hard disk 36, as described in detail below, to read multiple road data (i.e. the original data), merge data or difference update data from a CD-ROM 33, a DVD-ROM 34 or the hard disk 36 and store the read data into the RAM 24. Alternatively, the map data, the merge data or the differential update data received at the communicating device 38 may be stored into the RAM 24. Then, on the basis of the data stored in the RAM 24, updated data (i.e., re-written data) is generated for the navigation processing. A microprogram or the like is recorded in the ROM 23 for controlling operation of the control unit 20. The RAM 24 is used as a recording medium to record data during a processing by the CPU 22 and includes a volatile semiconductor memory such as a DRAM, a SDRAM or the like.

The data bus 30 is used to transfer data among the control unit 20, the CD-ROM drive 31, the DVD-ROM drive 32, the hard disk 36, the video output unit 40, the audio output unit 50, the input device 60 and a communication interface 37.

The CD-ROM drive 31 or the DVD-ROM drive 32 is a device to read the CD-ROM 33 or the DVD-ROM 34 in which the original data including the map data is stored.

The hard disk 36 is for storing the map data, the merge data or the differential update data instead of storing them into the CD-ROM 33 or the DVD-ROM 34. The hard disk 36 is also for reading the map data, the merge data or the differential update data under control of the CPU 22, as appropriate.

The video output unit 40 is provided with a graphic controller 41, a buffer memory 42, a display controller 43 and a display 44, for displaying road conditions, route guidance or the like in accordance with the predetermined navigation processing under control of the control unit 20, or for displaying a screen to input an external instruction via the input device 60. The graphic controller 41, which may includes a microcomputer or the like, is for controlling the display processing as a whole. The buffer memory 42, which may include a semiconductor memory such as a DRAM or the like, is for storing the video data to be processed (displayed) and for inputting or outputting the video data in accordance with an I/O (input-output) instruction of the graphic controller 41. The display controller 43 is for controlling the display 44 to perform the display processing under control of the graphic controller 41. The display 44, which may include an LCD, a CRT display or the like, is for displaying the video data on it.

The audio output unit 50 includes a D/A (digital-analog) converter 51, an amplifier 52 and a speaker 53, for outputting sound in accordance with the predetermined navigation processing under control of the control unit 20. The D/A converter 51 is for converting a digital audio signal, which is generated in the navigation apparatus, into an analog audio signal. The amplifier 52 is for amplifying the analog audio signal, which is converted from the digital audio signal, and for controlling the output level. The speaker 53 is for outputting sound, which is converted from the analog audio signal amplified and outputted from the amplifier 52.

The input device 60, which may include a remote controller, a controller, a touch panel or the like, is for receiving an external instruction to the navigation apparatus.

The microphone 61 is for receiving an audio input directly from a user of the navigation apparatus.

The communication interface 37 is for an I/O control of data in relation to each device, the data being transmitted and received through the communicating device 38 via a data transfer with a data center.

The communicating device 38, which includes a transceiver or the like capable of transferring information via a wired or wireless communication network, may perform a data transfer with the data center or the like to transfer the required information.

### (Operation Principle of the Navigation Apparatus)

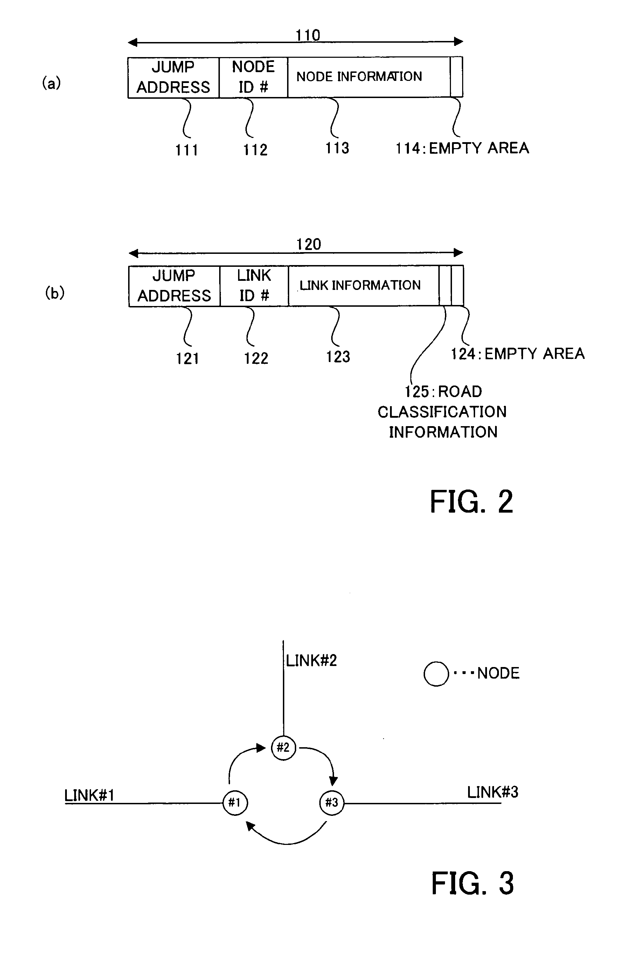

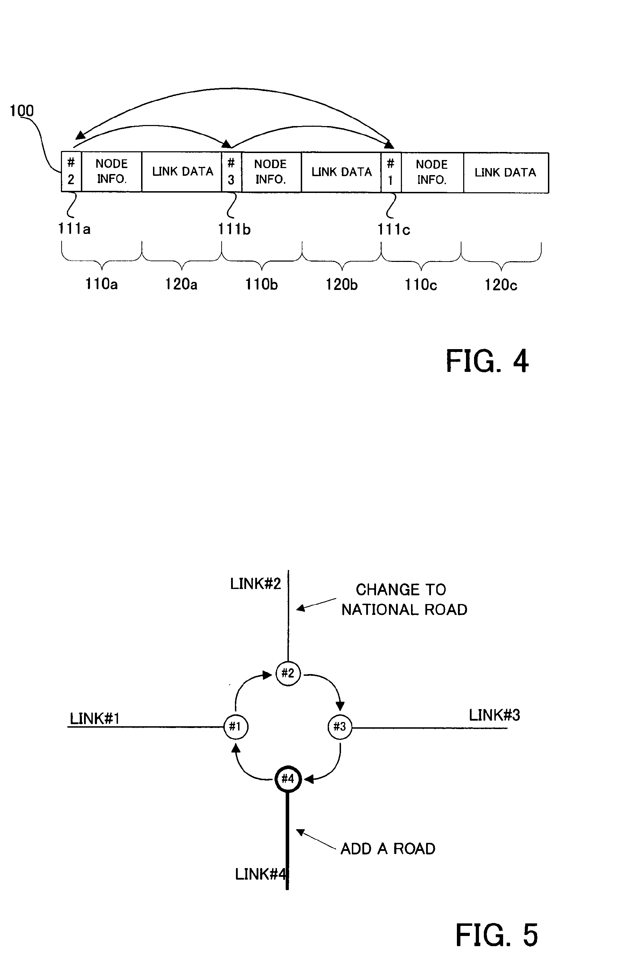

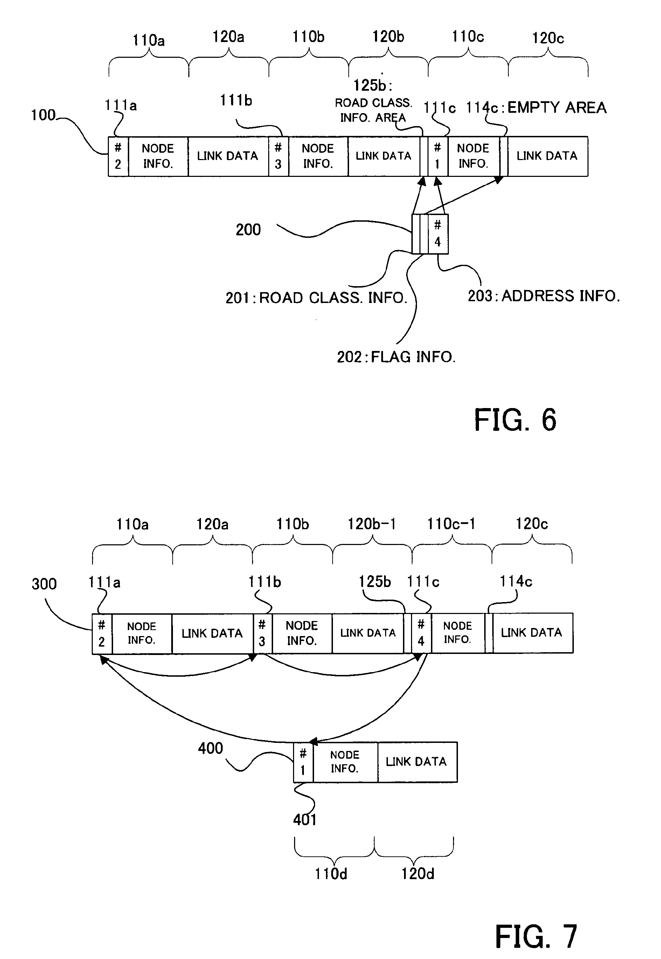

Now reference is made to FIG. 2(a) to FIG. 7, and the operation principle of the navigation apparatus according to the present invention will be discussed, on the basis of specified embodiments. FIG. 2(a) and FIG. 2(b) illustrate a processing unit of the original data including the map data used for the navigation apparatus according to the present embodiment. FIG. 3 illustrates an operation of the navigation apparatus according to the present embodiment when processing a certain intersection made of three roads. FIG. 4 illustrates a data structure of the original data representing the intersection in FIG. 3. FIG. 5 illustrates an intersection where another road is added to the intersection in FIG. 3. FIG. 6 illustrates a data structure of the original data and the merge data representing the intersection in FIG. 5. FIG. 7 illustrates a data structure of an updated data and a difference update data representing the intersection in FIG. 5.

As shown in FIG. 2(a) and FIG. 2(b), the original data to be used for the navigation apparatus according to the present embodiment, which is a plurality of the road data for the navigation purpose and based on a predetermined format, may include node data 110 that is representative of a "connecting point in a road network" (i.e. a node) and link data 120 that is representative of a road between two nodes. The original data includes a plenty of node data 110 and a plenty of link data 120.

In FIG. 2 (a), the node data 110 may include a jump address 111 (i.e., a jump target address), which designates an address of a to-be-accessed node or link in the original data, a node ID (identification) number 112, which designates node ID information, and node information 113, which is a substantial information part of the node. Further, the node information 113 has at least an empty area 114 (i.e., a reserved area) at a predetermined position. For example, flag information or the like to indicate whether or not the to-be-accessed node data 110 is included in the difference update data as mentioned below may be recorded into the empty area 114, in accordance with a position of the empty area 114 on the node data 110. That is, for example, only in the case that there is the flag information to indicate that the to-be-accessed node data 110 is included in the difference update data, a configuration in that the control unit 20 accesses the difference update data may be achieved. In this case, the position itself of the empty area 114 at which the flag information or the like may be recorded is meaningful. That is, the flag information or the like that is recorded in the empty area 114 is information to designate the jump address or the like of the node data 110 having the empty area 114 in which the flag information or the like is recorded, but is not information to designate the jump address or the like of another node data 110. Thus, there is no need to construct a jump list or table of each node data 110 separately from the original data or the node data 110. Accordingly, there is no need for a processing to access the jump list or the like. Therefore, it is very advantageous in reduction in data amount and processing load.

In FIG. 2(b), the link data 120 may include, for example, a jump address 121 to designate an address of the to-be-accessed node or link on the map data, a link ID number 122 to designate link ID information, and link information 123 that is representative of link information. The link information 123 includes, for example, (i) information to classify roads, for example, into national roads, prefectural roads or the like, (ii) information about regulations such as one-way traffic, and/or (iii) other information, which is recorded in a predetermined position in accordance with a predetermined code. Alternatively, information about road names may be recorded in a predetermined position in a text format, for example. For example, the information to classify roads, for example, into national roads, prefectural roads or the like is recorded in a predetermined binary code or predetermined hexadecimal code into a road classification information area 125. For example, from the first, a code "001" may be assigned to a national road, a code "011" may be assigned to a prefectural road, and a code "111" may be assigned to a private road, each of these code is recorded in a certain length of field to designate the road type in the link data 120 (e.g. the road classification information area 125). On the other hand, with regard to data to designate the road name, for example, if it is recorded in a text format into a certain length of field, the road name can be changed without changing the length or arrangement of data in the format. Further, the link information 123 includes at least one empty area 124 (i.e., a reserved area) in a predetermined position. With regard to the empty area 124, similarly to the empty area 114 of the node data 110 previously mentioned, the position itself of the empty area 124 in which information is recorded is meaningful. That is, information or the like, which is recorded into the empty area 124, is information to designate the jump address of the link data 120 including the empty area 124 in which the data is recorded, the same as in the case of the node data 110, and is not information to designate the jump address of another link data 120.

Incidentally, in FIG. 2 (a) and FIG. 2 (b), the jump address 111 and 112 are disposed at a head of the node data 110 and the link data 120, respectively, for convenience of explanation. Nevertheless, these addresses as logical addresses or physical addresses are not necessarily disposed at the head of each data, and may be disposed at an end of each data. Relating to this, for example, an access to the jump address 111 or 121 is performed, after reading the node data 110 or link data 120 including the jump address 111 or 121, or after data processing with the node data 110 or the link data 120. Further, with regard to the empty area 114 and 124, they are not necessarily disposed at the position exemplified in FIG. 2 (a) and FIG. 2 (b), and may be disposed at a certain position conformed to a certain format. Further, the same thing can be said for the road classification information area 125.

The original data, which includes a plenty of node data 110 and a plenty of link data 120 as shown in FIGs. 2(a) and 2(b) , is stored in the CD-ROM 33, the DVD-ROM 34 or the hard disk 36, which is shown in FIG. 1. The original data stored as mentioned above is read by the control unit 20, in a unit of node data 110 or link data 120, otherwise in a parcel unit including therein a plenty of node data and a plenty of link data, and then stored into the RAM 24.

As shown in FIG. 3, a T-shaped intersection is designated by three links and three nodes on the map data. ID information #1, #2 or #3 as the link ID number 122 is assigned to the three links, respectively. As well, ID information #1, #2 or #3 as the node ID number 112 is assigned to the three nodes, respectively. Furthermore, a node to be subsequently accessed is associated with each node. If this association forms a loop, the control unit 20 identifies that the nodes forming the loop constitute an intersection. For example, in the case of FIG. 3, the node to be accessed subsequently to the node #1 is associated with the node #2, the node to be accessed subsequently to the node #2 is associated with the node #3, and the node to be accessed subsequently to the node #3 is associated with the node #1, and these nodes form together a loop. Therefore, the control unit 20 identifies that the node #1, the node #2 and node #3 form together an intersection.

As shown in FIG. 4, the original data 100, which includes the road data about the T-shaped intersection as shown in FIG. 3, is provided with three node data 110 and three link data 120. That is, the original data 100 is provided with node data 110a of the node #1, node data 110b of the node #2 and node data 110c of the node #3, link data 120a of the node #1, link data 120b of the node #2 and the link data 120c of the node #3. The jump address of each node data designates an address of the node to be subsequently accessed. That is, the jump address 111a of the node #1 designates the node #2, the jump address 111b of the node #2 designates the node #3 and the jump address 111c of the node #3 designates the node #1. Therefore, the control unit 20 can read the jump address and access each node sequentially as shown by arrows in FIG. 4.

Next, as shown in FIG. 5, assume that another road is added to the T-shaped intersection in the original data, and the road designated by the link #2 is changed from a prefectural road to a national road. In this case, a node #4 and a link #4 to designate the new added road are also added to form one intersection. Hereinbelow, the operation principle of the navigation apparatus in this case will be described.

As shown in FIG. 6, merge data 200, which includes information to indicate the addition of the node #4 and the link #4, may be provided with (i) road classification information 201 to indicate a new road type of the link #2, (ii) flag information 202 to indicate that the jump address of the node #3 is changed to new one that is included in a difference update data 400 mentioned below, and (iii) address information 203 to indicate the new jump address of the node #3. The merge data 200 may be stored in the CD-ROM 33, the DVD-ROM 34 or the hard disk 36. Additionally, each of the road classification information 201, the flag information 202 and the address information 203 may include label information to identify a corresponding unit to be processed (node or link) in the original data 100.

In order to read the processing unit of the original data 100, the control unit 20 reads only the information including the label information corresponding to the ID number of the processing unit from among information in the merge data 200 (i.e. for example, the road classification information 201, the flag information 202 or the address information 203) to generate an updated data (i.e., re-written data) 300 mentioned below. On the other hand, each of the road classification information 201, the flag information 202 and the address information 203 includes, instead of or in addition to the aforementioned label information, offset information to indicate the address, at which a writing or an updating with the merge data is started, and to indicate how far the address is from the head address of the processing unit of the original data 100, and further includes size information to indicate a size to be recorded from the offset address designated by the offset information. Thereby, the control unit 20 may identify that the road type 201 is to be recorded into the road classification information area 125b of the link data 120b, for example. Similarly, the control unit 20 may recognize that the flag information 202 is to be recorded into the empty area 114c of the node data 110c as well as that the address information 203 is to be recorded at the jump address 111c of the node data 110c. Thereby, the control unit 20 records information included in the merge data 200 onto a predetermined position in the original data 100. Thus, an updated data 300 as shown in the upper section of FIG. 7 is generated and stored into the RAM 24.

As shown in the upper section of FIG. 7, the updated data 300, in which information about the newly added node #4 and link #4 is recorded, has a structure conformed with a predetermined format the same as that of the original data. That is, the updated data 300 is obtained by updating the information recorded in the road classification information area 125 of the link data 120b with the road classification information 201 designating a national road, recording the flag information 202 into the empty area 114c of the node data 110c, and updating the jump address 111c of the node data 110c with the address information 203 designating the node #4, on the basis of the original data.

For this reason, during the operation, the control unit 20 reads each node data 110 or link data 120 sequentially in accordance with the jump address to perform the navigation processing. Herein in order to read a link data 120b-1 obtained by updating the link data 120b, the control unit 20 performs the predetermined navigation processing with the recognition that a road designated by the link #2 is a national road, since the road classification information area 125 is updated or re-written with the road classification information 201 designating the national road. On the other hand, the control unit 20 reads the flag information 202 recorded in the empty area 114c of the node data 110c-1 obtained by updating the node data 110c, and then recognizes that data storing the node to be accessed subsequently to the node #3 is changed from the updated data 300 to the difference update data 400. That is, the control unit 20 recognizes that the node to be subsequently accessed is not in the updated data 300, but in the difference update data 400 that may be stored in the CD-ROM 33, the DVD-ROM 34 or the hard disk 36. Then, the control unit 20 reads the address information 203, which is recorded at the jump address 111c of the node data 110c-1. The jump address (i.e., the address to be jumped) designated by the address information 203 is for designating an address of the node #4 and for recognizing that the data storing the node to be subsequently accessed is included in the difference update data 400, through reading the aforementioned flag information. For this reason, the control unit 20 accesses the difference update data 400 to read the node data 110d designating the node #4 and the link data 120d designating the link #4, and store them into the RAM 24.

As shown in the lower section of FIG. 7, the difference update data 400 includes the node data 110d designating the node #4 and the link data 120d designating the link #4. The jump address 401 of the node data 110d designates the address of the node #1. Thereby, the control unit 20 accesses the node #1 next to the node #4. Here, an association among the jump addresses of each node forms a loop, thereby the control unit 20 recognizes that the node #1, the node #2, the node #3 and the node #4 form one intersection. That is, similarly to the predetermined navigation processing using the original data 100 only, a predetermined normal navigation processing can be performed, with using the difference update data 400.

Incidentally, the jump address 401 of the difference update data 400 is for directing destinations to each other among multiple difference update data, by recording, into the corresponding difference update data 400, jump data ID information, flag information or the like to indicate whether the jump address in the difference update data 400 directs an address of the updated data 300 or an address of another difference update data 400.

As a result, even if a road is added or the information about the road is changed, it is possible for the navigation apparatus to perform the navigation processing using the multiple road data in which the new information is reflected, without changing an interpretation of the format of the original data 100. Further, it is possible for the navigation apparatus to perform the predetermined navigation processing efficiently only with an access to a necessary part of the difference update data 400, by changing the jump address 111 (or 121) of the original data 100 and by recording the flag information into the empty area 114 (or 124).

Incidentally, in the above embodiment, the merge data 200 or the difference update data 400 is stored in the CD-ROM 33, the DVD-ROM 34 or the hard disk 36. Nevertheless, these data may be stored in various information recording media. For example, they may be stored in a re-writable information recording medium, such as a CD-RW, a DVD-RW or the like. Alternatively, they may be stored in a removable-type information recording medium, such as a memory card, a memory stick or the like. Alternatively, these data may be received at the communicating device 38, for example via Internet.

On the other hand, the updated data 300 may be stored into the hard disk 36, after the predetermined navigation processing on the RAM 24. Alternatively, the updated data 300 may be generated altogether for the entire merge data 200. Alternatively, the updated data 300, which is generated for each processing unit of the navigation apparatus, may be stored into the hard disk 36 and used in the navigation processing later.

Incidentally, as in the above embodiment, by not only using the flag information to indicate whether or not the data to be subsequently accessed is included in the difference update data 400, but also altering the computer program used for the navigation apparatus or modifying the design of the control unit 20, it is possible to give new meaning to the empty area 114 (or 124) and thereby propose various additional functions.

### (Specific Operations of the Navigation Apparatus)

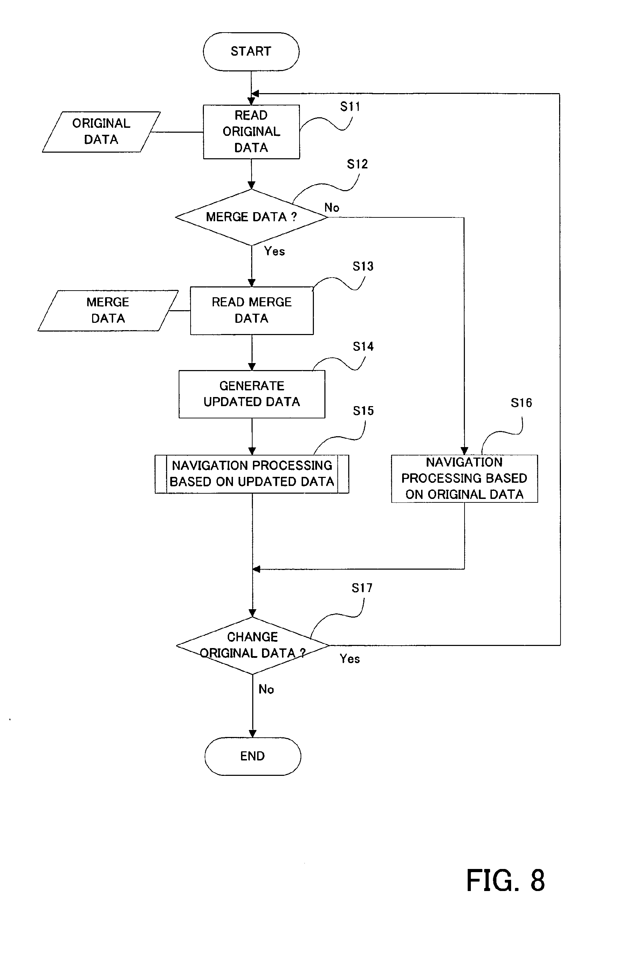

Next, with reference to flow charts of FIG. 8 to FIG. 12, an operation in the embodiment of the navigation apparatus according to the present invention will be discussed, on a case-by-case basis. Herein FIG. 8 to FIG. 12 are flow charts illustrating the operation of the navigation apparatus according to the embodiment of the present invention.

### (1) A case that the merge data and the difference update data are included in a information recording medium.

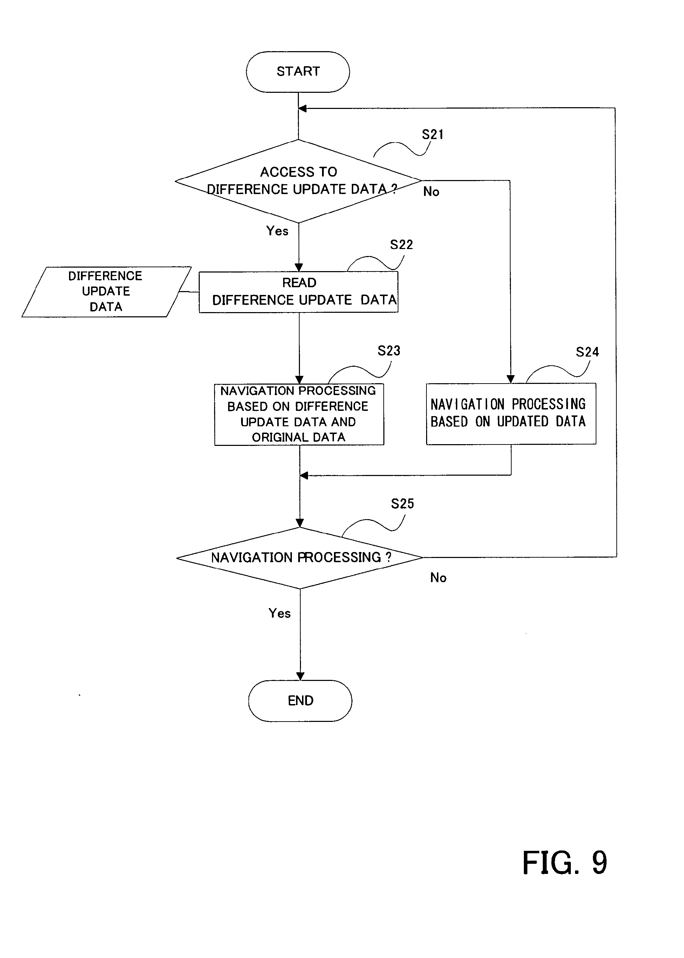

This case will now be discussed, with reference to FIG. 8 and FIG. 9.

As shown in FIG. 8, on the operation of the navigation apparatus according to the present invention, firstly, the control unit 20 (i.e. CPU 22) reads a parcel unit of the original data 100, which is stored in the CD-ROM 33, the DVD-ROM 34 or the hard disk 36, in accordance with a current position, which may be determined in a GPS measurement, and store it in the RAM 24 (step S11). Next, it is judged whether the merge data 200 corresponding to the original data 100 read by the control unit 20 exists or not, for example on the basis of the aforementioned label information or the like (step S12).

If the corresponding merge data 200 does not exist (step S12: NO), the predetermined navigation processing such as an optimal route searching proceeds under control of the CPU 22, on the basis of the original data read by the control unit 20 (step S16). That is, by using only the node data 110 and the link data 120 included in the original data 100, the navigation processing proceeds by the parcel unit of the original data 100 that is read at the step S11. After completion of the navigation processing by the parcel unit, the process goes to the step S17.

On the other hand, if the corresponding merge data 200 exists (step S12: YES), the control unit 20 reads a part of the merge data 200 stored in the CD-ROM 33, the DVD-ROM 34 or the hard disk 36 corresponding to the original data 100 that is read at the step S11, and stores it into the RAM 24 (step S13). After that, the control unit 20 writes the merge data 200 into the original data 100 that is read at the step S11 to generate newly an updated data 300 and stores it into the RAM 24 (step S14).

After that, as mentioned below, the predetermined navigation processing proceeds on the basis of the updated data (step S15). Then, it is judged whether or not another parcel unit of the original data 100 different from the parcel unit of the original data 100 that is read at the step S11 is to be read (step S17). If another parcel unit of the original data 100 is to be read (step S17: YES), the control unit 20 reads again said another parcel unit of the original data 100 (step S11). If another parcel unit of the original data 100 is not to be read (step S17: NO), the navigation processing is terminated in its operation.

Next, with reference to a flow chart of FIG. 9, the predetermined navigation processing to be performed on the basis of the updated data (step S15) will be discussed.

For example, as shown in FIG. 9, the flag information, which is written in the predetermined empty area 114 (or 124) of the original data 100 in the updated data 300 that is generated at the step S14 (See FIG. 8), is read for a judgement whether or not the data storing the node or link that the CPU 22 accesses next in the predetermined navigation processing is included in the difference update data 400 (step S21).

If the data storing the node or link that the CPU 22 accesses next is not included in the difference update data 400 (step S21: NO), the predetermined navigation processing such as a route searching proceeds (step S24), under control of the CPU 22, on the basis of the updated data 300 generated at the step S14 (See FIG. 8). That is, only with the node data 110 or link data 120 included in the updated data 300, the navigation processing proceeds. Then, the process goes to the step S25.

On the other hand, if the data storing the node or link that the CPU accesses next is included in the difference update data 400 (step S21: YES), among from the difference update data 400 stored in the CD-ROM 33, the DVD-ROM 34 or the hard disk 36, the node data 110 or link data 120 to be subsequently accessed is read and stored in the RAM 24 (step S22). Then, the navigation processing proceeds (step S23), under control of the CPU 22, on the basis of the updated data 300 generated at the step S14 (See FIG. 8) and the node data 110 or link data 120 in the difference update data 400 that is read at the step S22. That is, with node data 110 or link data 120 included in the updated data 300, and node data 110 or link data 120 included in the difference update data 400, the navigation processing proceeds.

Then, it is judged whether or not the node or link to be subsequently accessed in the predetermined navigation processing exists, i.e. whether or not the predetermined navigation processing is to be terminated (step S25). If the predetermined navigation processing is to be continued, i.e. if another node or link is to be accessed again (step S25: YES), it is judged again whether or not the node or link to be subsequently accessed is included in the difference update data 400, on the basis of the updated data 300 (step S21). On the other hand, if the navigation processing is to be terminated, i.e. if the processing by the parcel unit of the original data 100 that is read at the step S11 (See FIG. 8) is to be terminated (step S25: YES), the navigation processing is to be terminated, and it is judged whether or not another parcel unit of the original data 100 is to be read (step S17) (See FIG. 8).

### (2) A case that the merge data and the difference update data are received via the communication network.

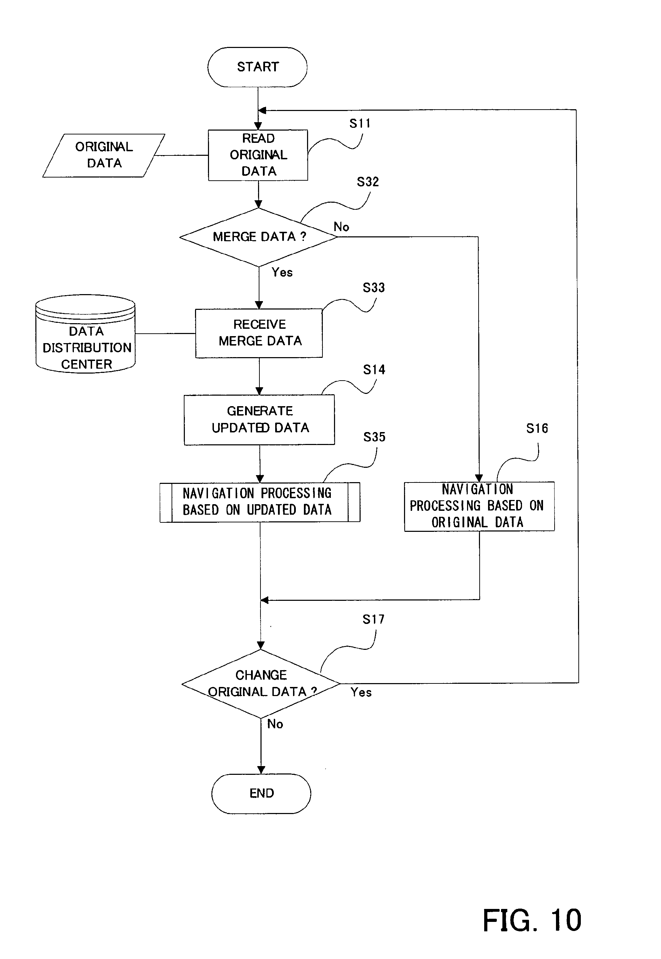

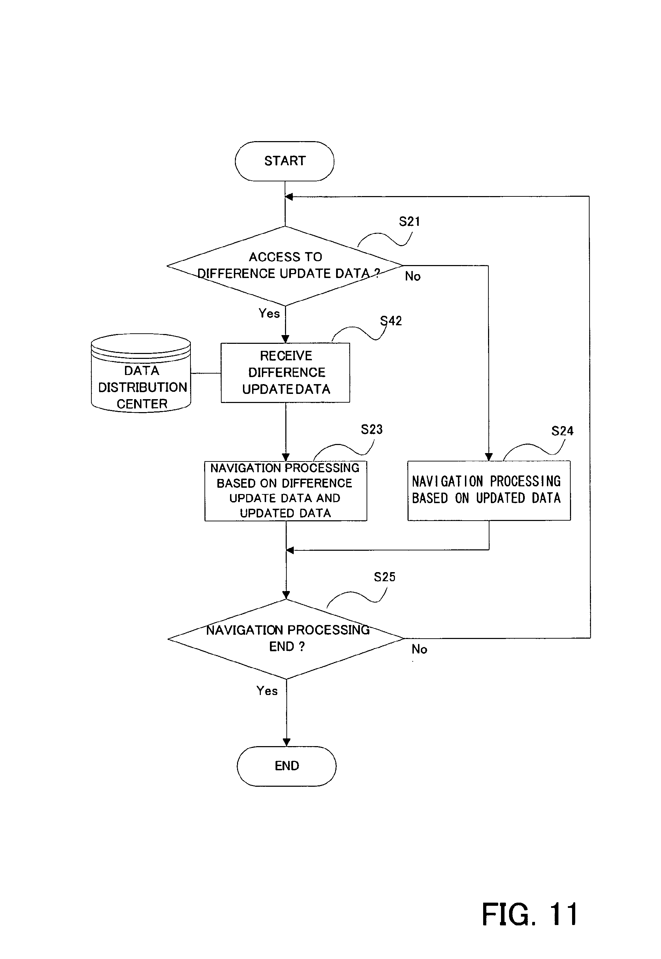

This case will be discussed, with reference to FIG. 10 and FIG. 11. Incidentally, in FIG. 10 and FIG. 11, the same steps as those in FIG. 8 and FIG. 9 carry the same reference numerals, and the explanations thereof are omitted.

As shown in FIG. 10, on operation of the navigation apparatus according to the embodiment of the present invention employing a scheme of receiving the merge data and the difference update data via the communication network, firstly, the original data 100 is read (step S11). Next, it is judged whether or not the merge data 200 corresponding to the original data already read exists (step S32). In this case, for example, ID information for the original data 100 already read may be transmitted to the data distribution center or the like through the communicating device 38 via the communication network such as Internet, for a judgement at the data distribution center about whether or not the merge data 200 corresponding to the original data 100 exists.

If the data distribution center make a response as a result of the judgement indicating nonexistence of the merge data 200 corresponding to the original data (step S32: NO), the navigation processing proceeds on the basis of the original data 100 (step S16). Then, the process goes to the step S17.

If the data distribution center make a response as a result of the judgement indicating existence of the merge data 200 corresponding to the original data (step S32: YES), a distribution request or the like is transmitted to the data distribution center through the communicating device 38 via the communication network, and the merge data 200 as required is received and stored into the RAM 24 (step S33). Relating to this, the merge data 200 as required may be received at the same time of receiving the response from the distribution center indicating the existence of the merge data 200 corresponding to the original data 100. Then, the received merge data 200 is recorded into the read original data 100 to generate a new updated data 300 and store it into the RAM 24 (step S14). Then, as mentioned below, the navigation processing proceeds, on the basis of the updated data generated at the step S14 (step S35).

Then, it is judged whether or not another parcel unit of the original data 100 is to be read (step S17), and the parcel unit of the original data is further read (step S11). Otherwise, the navigation apparatus is terminated.

Next, with reference to a flow chart of FIG. 11, the predetermined navigation processing to be performed on the basis of the updated data (step S35) will be discussed.

As shown in FIG. 11, it is judged whether or not the data storing the node or link to be subsequently accessed is included in the difference update data 400 (step S21).

If the data storing the node or link to be subsequently accessed is not included in the difference update data 400 (step S21: NO), the predetermined navigation processing proceeds (step S24), on the basis of the updated data 300 that is generated at the step S14 (See FIG. 10). Then, the process goes to the step S25.

On the other hand, if the data storing the node or link to be subsequently accessed is included in the difference update data 400 (step S21: YES), a distribution request may be transmitted to for example the data distribution center or the like so as to distribute for example the node data 110 or link data 120 to be accessed in the difference update data 400, through the communicating device 38 via the communication network. As a response to this, the difference update data 400 as required is received and stored into the RAM 24 (step S42). Then, the predetermined navigation processing proceeds (step S23), on the basis of the node data 110 and the link data 120 in the difference update data 400 received at the step S42 and the updated data 300 generated at the step S14 (See FIG. 10).

Then, it is judged whether or not the predetermined navigation processing (i.e., the predetermined processing for navigation) is to be terminated (step S25). If the predetermined navigation processing is to be continued (step S25: YES), it is judged again whether or not the node or link to be subsequently accessed is included in the difference update data 400 (step S21). If the predetermined navigation processing is to be terminated (step S25: NO), the predetermined navigation processing is terminated and it is judged whether or not another parcel unit of the original data is to be read (step S17) (See FIG. 10).

As mentioned above, owing to a construction of receiving the merge data 200 and the difference update data 400 via the communication network, the amount of data to be processed in the navigation apparatus according to the present invention can be reduced, with only receiving the merge data 200 or the difference update data 400 required for the predetermined navigation processing. That is, a navigation apparatus improved in its performance speed or its efficiency can be implemented.

Incidentally, as mentioned above, the merge data or the difference update data may be received in advance and stored into the hard disk 36 or the like, instead of receiving the merge data or the difference update data at every navigation processing. In this case, the navigation processing proceeds, in accordance with the exemplary operation shown in FIG. 8 and FIG. 9.

### (3) A case that the updated data already generated is re-used.

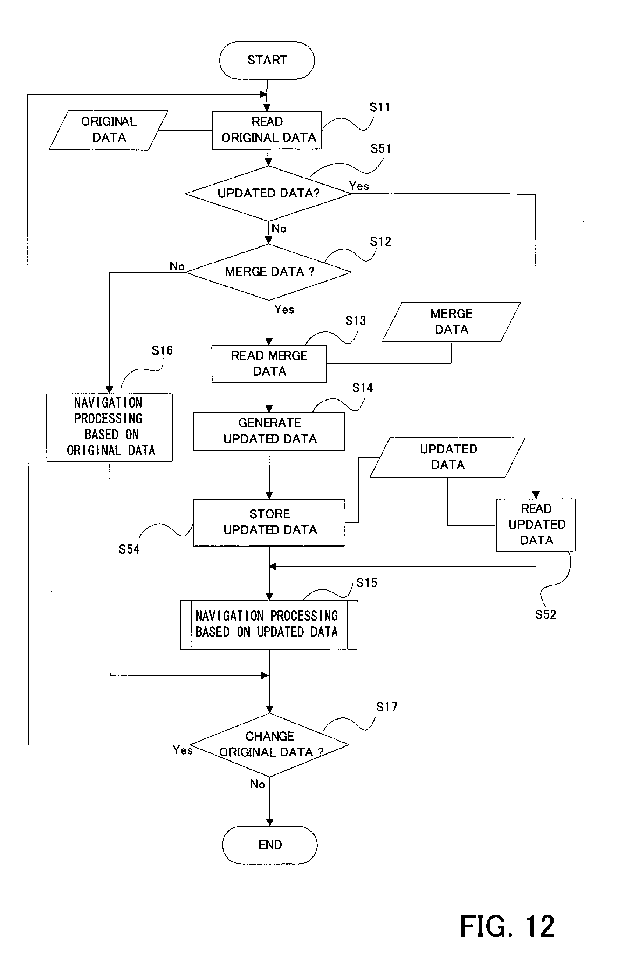

This case will be discussed, with reference to FIG. 12. Incidentally, in FIG. 12, the same steps as those shown in FIG. 8 and FIG. 9 carry the same reference numerals, and the explanations thereof are omitted.

As shown in FIG. 12, on operation of the navigation apparatus according to the present invention employing a scheme of re-using the updated data already generated, firstly, the original data 100 is read (step S11). Next, it is judged whether or not the updated data 300 corresponding to the original data 100 already read exists (step S51). In this case, for example, the judgement may be performed with the ID information of the original data 100 already read (e.g. a node ID number, a link ID number or the like) and the ID information of the original data included in the updated data 300.

If the corresponding updated data 300 exists (step S51: YES), i.e. if the original data 100 for which the updated data 300 is already generated is read, the updated data 300 stored in the hard disk 36 is read and stored into the RAM 24 (step S52). Then, the predetermined navigation processing proceeds (step S15), on the basis of the updated data 300.

On the other hand, if the updated data 300 corresponding to the original data 100 that is read at the step S11 does not exist (step S51: NO), it is judged whether or not the merge data 200 corresponding to the original data 100 exists (step S12).

If the corresponding merge data 200 does not exist (step S12: NO), the predetermined navigation processing proceeds (step S16), on the basis of the original data 100 that is read at the step S11. Then, the process goes to the step S17.

On the other hand, if the corresponding merge data 200 exists (step S12: YES), the merge data 200 is read (step S13) to generate the updated data 300 (step S14). Then, the updated data 300 generated at the step S14 is stored into the hard disk 36 for re-use in the later predetermined navigation processing (step S54). Then, the navigation processing proceeds on the basis of the updated data (step S15).

After the navigation processing is terminated, it is judged whether or not another parcel unit of original data 100 is to be read (step S17), and the parcel unit of original data 100 is further read (step S11). Otherwise, the navigation apparatus is terminated in its operation.

As mentioned above, re-using the updated data 300 eliminates a necessity for the control unit 20 to generate the updated data 300 repeatedly. Thereby, the duty on the control unit 20 is alleviated and hence the navigation apparatus according to the present invention can be improved in its performance speed.

### (Fundamental Construction of Apparatus for Generating Difference Update Data)

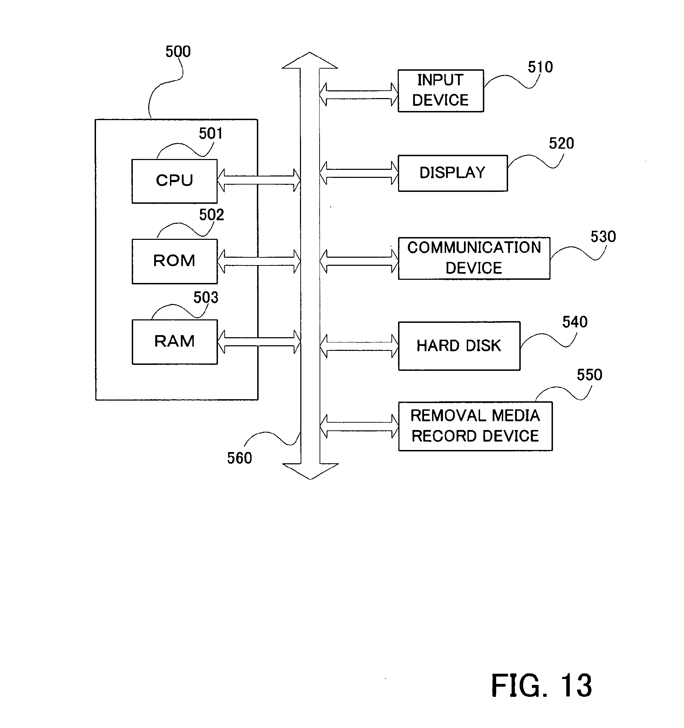

Next, with reference to FIG. 13, a fundamental construction of an apparatus for generating difference update data according to the embodiment of the present invention will now be discussed. FIG. 13 illustrates a fundamental construction of an apparatus for generating difference update data.

As shown in FIG. 13, the apparatus for generating the difference update data according to this embodiment is provided with a control unit 500, an input device 510, a display 520, a communication device 530, a hard disk 540, a removal media record device 550 and a data bus 560.

The control unit 500 is for controlling the apparatus for generating the difference update data as a whole and includes a CPU 501, a ROM 502 and a RAM 503. The CPU 501 may generate the difference update data 400 (See FIG. 7) and the merge data 200 (See FIG. 6) as in an exemplary operation as follows, from a road update condition that is inputted as data or inputted via the input device 510, on the basis of the original data 100 (See FIG. 4). The ROM 502, in which a microprogram or the like is recorded, defines an operation of the control unit 500. The RAM 503, which may include a volatile semiconductor memory such as a DRAM or an SDRAM, is used as a recording medium to record data during a processing by the CPU 501.

The input device 510, which may includes a keyboard, a mouse, a remote controller, a tablet or the like, receives an external instruction or input to the apparatus for generating the difference update data.

The display 520, which may includes a CRT display, an LCD or the like, displays externally a condition of the apparatus for generating the difference update data during its operation or a manipulation screen of the apparatus for generating the difference update data.

The communicating device 530, which includes a transceiver or the like capable of transferring information via a wired or wireless communication network, may transmit and receive the information as required by a data transfer with the navigation apparatus.

The hard disk 540 stores the original data 100. Alternatively, it may store the merge data 200 and the difference update data 400 generated by the CPU 501.

The removal media record device 550 records the merge data 200 or the difference update data 400 generated by the apparatus for generating the difference update data into for example a removal type information recording medium (i.e. removal medium) such as a memory stick or a memory card.

The data bus 560 is used for a data transfer between or among the control unit 500, the input device 510, the display 520, the communicating device 530, the hard disk 540 and the removal media recording medium 550.

### (Method of Generating the Difference Update Data)

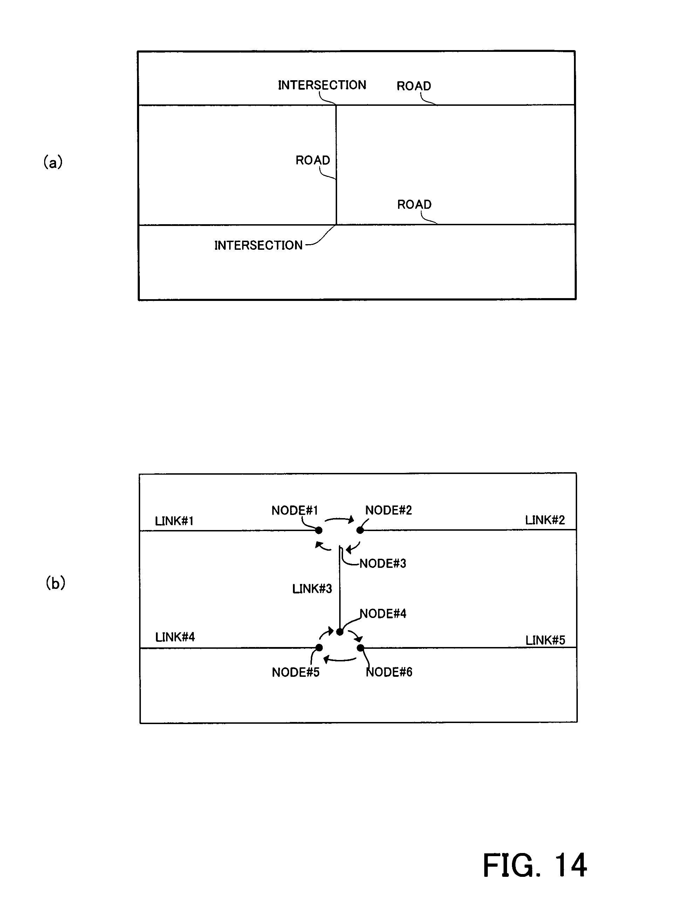

Next, with reference to FIG. 14(a) to FIG. 23, various examples of the method of generating the difference update data, which is performed in an example of the difference update data generating apparatus of the present invention, will be discussed.

### (1) Method of Generating the Difference Update Data in the case that a road type is changed.

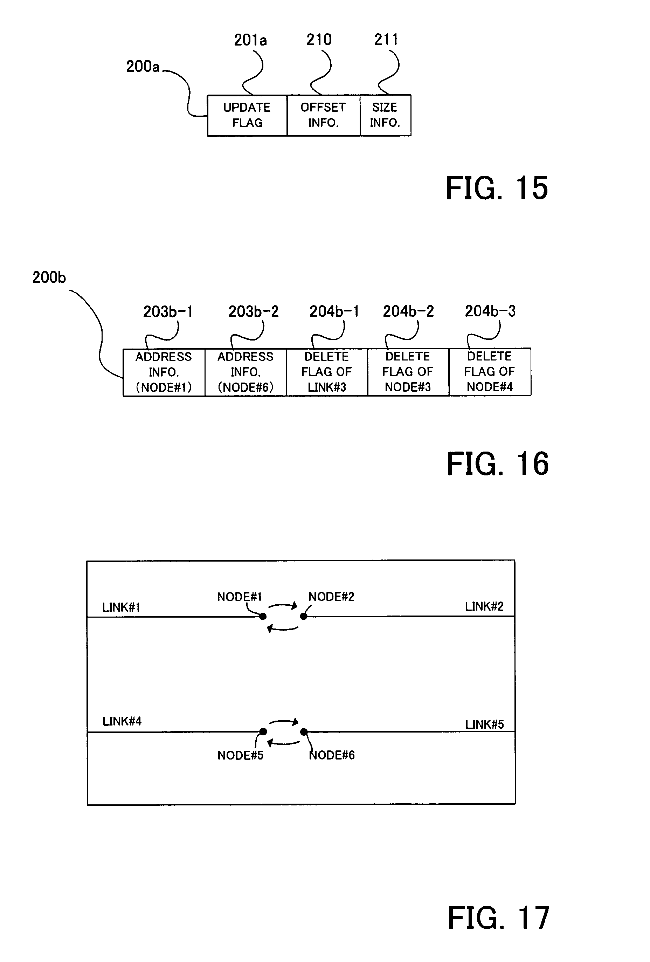

This case will be discussed, with reference to FIG. 14(a), FIG. 14(b) and FIG. 15. FIG. 14 (a) illustrates predetermined roads, FIG. 14 (b) illustrates an exemplary recognition of the predetermined roads in a predetermined navigation processing, and FIG. 15 illustrates a data structure of a merge data generated by the apparatus for generating the difference update data according to this embodiment.

Real roads as shown in FIG. 14 (a) are treated in a condition like as shown in FIG. 14 (b) as the original data 100 used for the predetermined navigation processing. That is, the original data 100 includes nodes #n (n= 1 to 6) and links #m (m= 1 to 5 ). A node to be subsequently accessed is indicated by a jump address 111 of a node data 100 (See FIG. 2 for example) representing each node. That is, a jump address of the node #1 indicates the node #2, a jump address of the node #2 indicates the node #3 and a jump address of the node #3 indicates the node #1. Similarly, a jump address of the node #4 indicates the node #6, a jump address of the node #6 indicates the node #5 and a jump address of the node #5 indicates the node #4.

Now assume that the road type of the link #3 in FIG. 14 (b) is changed from a national road to a prefectural road. Herein a predetermined code "001" is assigned to the national road , and a predetermined code "011" is assigned to the prefectural road, in the original data.

As shown in FIG. 15, in this case, the control unit 500 generates a merge data 200a including an update flag 201a in which the code of the prefectural road is included, on the RAM 503. Additionally, the updated flag 201a includes size information 211 and offset information 210 to indicate a position in the original data 100 to which the update flag 201a is to be recorded. The offset information 210 defines an address at which the updated flag 201a, a delete flag as mentioned below, address information as mentioned below or an over-write flag as mentioned below, as well as how far the address is from a head address of a processing unit (i.e. a parcel unit, a node unit, a link unit or the like) of original data 100. Size information 211 defines size of the updated flag 201a, the delete flag, the address information or the over-write flag to be recorded in the original data 100. The offset information 210 and the size information 211 may be generated individually for the updated flag 201a, the delete flag, the address information or the over-write flag, respectively.

The merge data 200a generated as mentioned above may be stored in the hard disk 540. The merge data 200a stored as mentioned above may be transmitted to an owner or the like of the navigation apparatus through the communicating device 530. Alternatively, it may be stored in a removal media such as a memory stick by means of the removal media record device 550 and in turn the removal media may be distributed or sent to the owner or the like of the navigation apparatus.

After obtaining the merge data 200a, the navigation apparatus for example according to this embodiment generates the updated data 300 (See FIG. 7) on the basis of the merge data 200a (See FIG. 15) for the predetermined navigation processing. That is, owing to the update flag 201a included in the merge data 200a, the code "011" representing the prefectural road is recorded into a predetermined part, which indicates the road type, of the link data 120 representing the link #3 included in the original data 100. Thereby, it is possible to perform the predetermined navigation processing in which the latest road conditions is reflected, without changing the interpretation of the format of the original data 100.

### (2) Method of Generating the Difference Update Data in the case that a road is deleted.

This case will be discussed, with reference to FIG. 16 and FIG. 17. FIG. 16 is a schematic view illustrating a data structure of a merge data generated by the apparatus for generating the difference update data according to this embodiment, and FIG. 17 is a schematic view illustrating an exemplary recognition of predetermined roads, in the case that the merge data generated as such is used for the predetermined navigation processing.

Now assume that the road represented by the link #3 is deleted, in a road network the same as that shown in FIG. 14 (b). In this case, the apparatus for generating the difference update data according to this embodiment generates a merge data 200b as shown in FIG. 16, for example on the RAM 503, due to the operation of the control unit 500.

As shown in FIG. 16, the merge data 200b includes a delete flag 204b-1 to indicate that the link data representing the link #3 is to be deleted from the original data 100 for the predetermined navigation processing. The merge data 200b also includes a delete flag 204b-2 to indicate that the node data representing the node #3 is to be deleted as well as a delete flag 204b-3 to indicate that the node data representing the node #4 is to be deleted. The merge data 200b further includes address information 203b-1 to direct the jump address of the node #2 to an address of the node #1 as well as address information 203b-2 to direct the jump address of the node #5 to an address of the node #6. Each of the delete flags 204b-1 to 204b-3 and the address information 203b-1 to 203b-2 includes, similarly to the aforementioned updated flag 201a (See FIG. 15), size information and offset information to define a position in the original data 100 (i.e. address) at which each of them is to be recorded (both of them not illustrated).

After obtaining the merge data 200b generated as such, for example the navigation apparatus according to this embodiment generates the updated data 300, which may be processed as the road data as shown in FIG. 17 for the predetermined navigation processing, on the basis of the merge data 200b, as mentioned above.

That is, as shown in FIG. 17, the jump address of the node #2 is directed or changed to the address representing the node #1, and thereby the navigation apparatus recognizes that the node #1 and the node #2 forms one intersection. On the other hand, the jump address of the node #5 is directed or changed to the address representing the node #6, and thereby the navigation apparatus recognizes that the node #5 and the node #6 forms one intersection. With reading the delete flag 204b-1 of the link #3, the apparatus recognizes that the link data representing the link #3 is to be deleted from the original data 100 for the processing. Similarly, with reading the delete flag 204b-2 of the node #3 and the delete flag 204b-3 of the node #4, the apparatus recognizes that the node data representing the node #4 and the link data representing the link #3 are to be deleted from the original data for the processing.

Consequently, with updating the empty area or the predetermined part of the original data 100 with the merge data generated by the apparatus for generating the difference update data according to the present embodiment, the predetermined navigation processing can be achieved with reflecting the latest road conditions into the processing, without changing the interpretation of the format of the original data 100.

Incidentally, in the specific example of the FIG. 17, the difference update data and the merge data may be configured so as to provide a new link made of the link #1 and the link #2, as well as a new link made of the link #4 and the link #5.

### (3) Method of Generating the Difference Update Data in the case that a road is added.

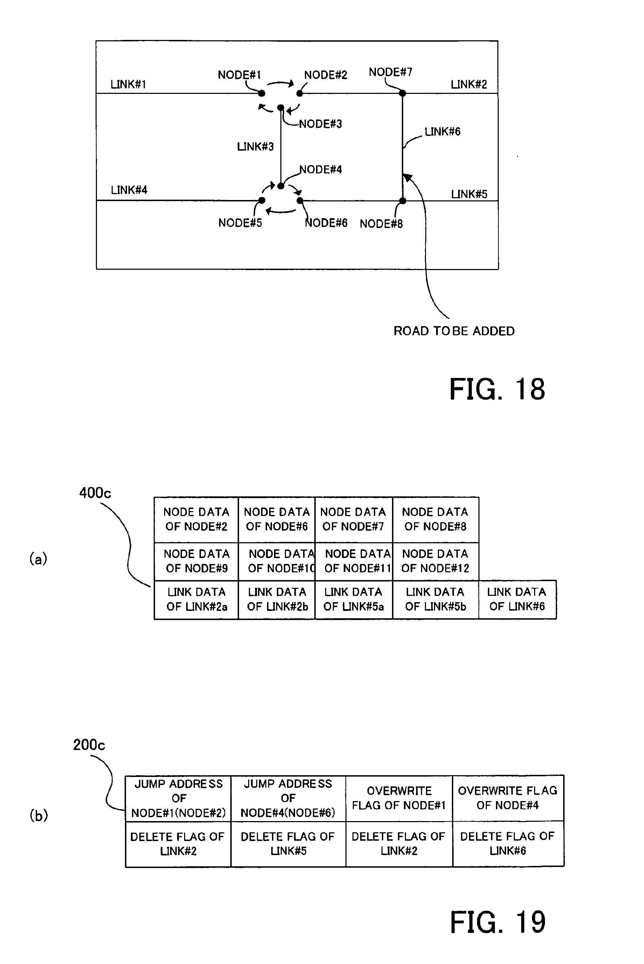

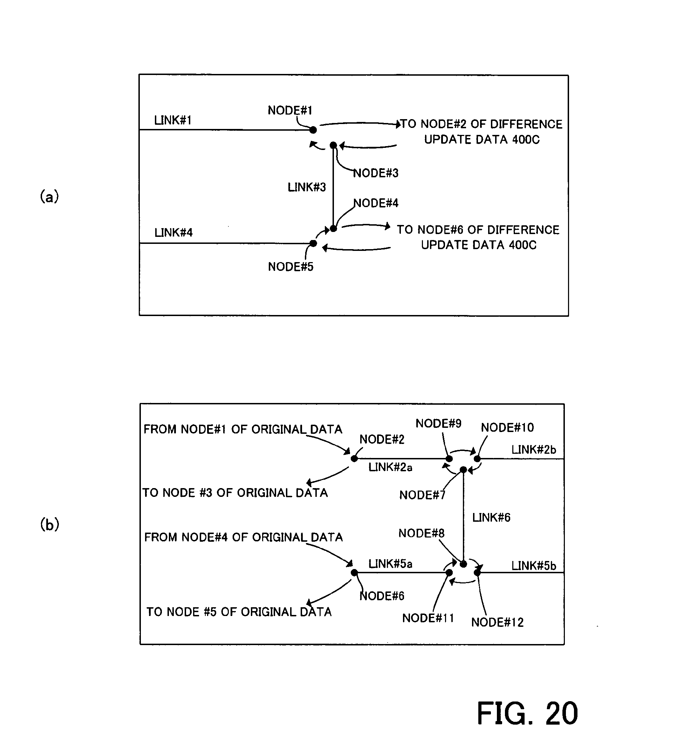

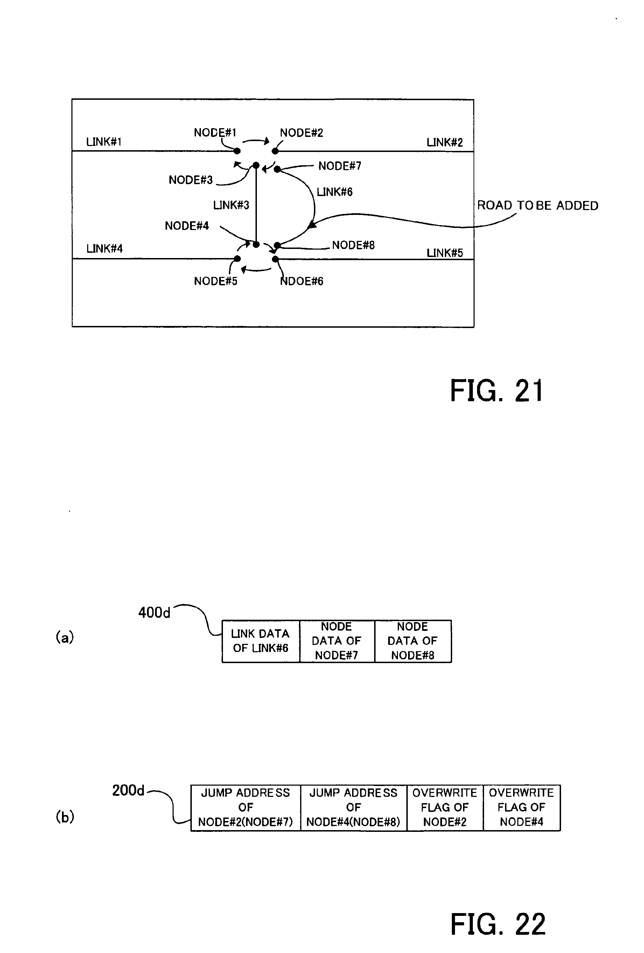

This case will be discussed, with reference to FIG. 18 to FIG. 22. FIG. 18 illustrates a specific example in which a road is added to a preset road network; FIG. 19(a) and FIG. 19(b)illustrate a data structure of the merge data and the difference update data generated by the apparatus for generating the difference update data according to this embodiment; FIG. 20(a) and FIG. 20(b) illustrate an exemplary recognition of the preset road network, in the case that the difference update data and the merge data generated by the apparatus is used for the predetermined navigation processing; FIG. 21 illustrates another specific example in which a road is added to another preset road network; and FIG. 22(a) and FIG. 22(b) illustrate another data structure of the merge data and the difference update data generated by the apparatus for generating the difference update data according to this embodiment.

Firstly, with reference to FIG. 18 to FIG. 20(b), the case that a road is added to form a new intersection will be discussed.

As shown in FIG. 18, assume that a road to form a new intersection is added to a road network the same as that shown in FIG. 14(a) and FIG. 14(b). In this case, the new road (i.e. link #6 with nodes #7 and #8) is added to the link #2 and the link #5 at points other than the node of each link. In this case, the new intersection is formed and therefore there is a need to dispose new nodes for the link #2 and the link #5, respectively. For this reason, the apparatus for generating the difference update data according to this embodiment generates the difference update data 400c and the merge data 200c as shown in FIG. 19(a) and FIG. 19(b), for example on the RAM 503, with the aid of the control unit 500, preventing the navigation apparatus from changing later the interpretation of the format of the original data 100.

As shown in FIG. 19 (a), the difference update data 400c is generated, with the aid of the control unit 500, so that the difference update data 400c includes the new road that is added in the aforementioned manner, and further includes the existing road and the connection thereof, which are included in the original data 100 and to which the new road is connected. That is, the data 400c is generated so as to include the link data representing the link #2, the node data representing the node #2 as well as the link data representing the link #5 and the node data representing the node #6 in addition to the link data representing the link #6, the node data representing respectively the nodes #7 and #8.

Furthermore, in order to form the new intersection, the difference update data 400c is generated so as to include link data representing a link #2a and another link data representing a link #2b, the link #2a newly defined as a link to divide the link #2 at the connection with the link #6 and defined as a link including the node #2 and the link #2b newly defined as a link to divide the link #2 at the connection with the link #6 and defined as a link not-including the node #2. Relating to this, the data 400c is generated so as to include node data representing a node #9 and another node data representing a node #10, the node #9 newly defined as another connection of the link #2a, and the node #10 newly defined as one connection of the link #2b. With regard to the link #5, similarly, the difference update data is generated so as to include link data representing a link #5a and another link data representing a link #5b, the link #5a newly defined as a link including the node #6, while the link #5b as a link not-including the node #6. Relating to this, the difference update data is generated so as to include node data representing a node #11 and another node data representing a node #12, the node #11 newly defined as another connection of the link #5a, while the node #12 as one connection of the link #5b.

Herein each link data and each node data are generated with their jump address in an appropriate set condition. Specifically, a jump address of the node #7 directs to the node #9, a jump address of the node #9 directs to the node #10, and a jump address of the node #10 directs to the node #7. On the other hand, a jump address of the node #8 directs to the node #12, a jump address of the node #12 directs to the node #11, and a jump address of the node #11 directs to the node #8. Furthermore, a jump address of the node #2 directs to an address representing the node #3 in the original data 100, while a jump address of the node #6 directs to an address representing the node #5 in the original data 100. Herein each link data and each node data may include an attribute flag respectively to indicate whether the link data or node data to be subsequently accessed is included in the original data 100 or in the difference update data 400c.

Furthermore, as shown in FIG. 19 (b), the merge data 200c is generated so as to include a delete flag to delete the link data representing the link #2 in the difference update data 400c from the original data 100 for the predetermined navigation processing, with the aid of the control unit 500. With regard to the link #5, the node #2 and the node #6, similarly, each delete flag is generated, respectively.

On the other hand, a jump address of the node #1 is changed from the address representing the node #2 in the original data 100 to the address representing another node #2 in the difference update data 400c. For this reason, the merge data 200c includes address information to update the jump address of the node #1 with the address representing the node #2 in the difference update data. Similarly, it also includes address information to update the jump address of the node #4 with the address representing the node #6 in the difference update data 400c.

Additionally, it includes an update flag of the node #1 capable of updating the attribute flag in the node data representing the node #1. The update flag of the node #1 is for indicating that the node #2 to be subsequently accessed is included in the difference update data 400c. Similarly, it includes an update flag of the node #4 capable of updating the attribute flag in the node data representing the node #4. The update flag of the node #4 is for indicating that the node #6 to be subsequently accessed is included in the difference update data 400c.

Similarly to the aforementioned update flag 201a (See FIG. 15), each of these delete flags, address information and update flags includes offset information and size information (both of them not illustrated), respectively. Thereby, the delete flag can be recorded into the predetermined empty area, the address information can be recorded into the predetermined jump address of link data or node data, and the update flag can be recorded into the predetermined attribute flag.

After obtaining the difference update data 400c and the merge data 200c generated as mentioned above, the navigation apparatus according to this embodiment generates the updated data 300, as mentioned above on the basis of the difference update data 400c and the merge data 200c, which (the updated data 300) is used as road data for the predetermined navigation processing shown in FIG. 20(a) and FIG. 20(b).

The navigation apparatus according to this embodiment can perform the predetermined navigation processing while making access alternately to road data represented by the updated data 300 as shown in FIG. 20 (a), and another road data represented by the difference update data 400c as shown in FIG. 20 (b), on the basis of the jump address information or the attribute flag.

Next, with reference to FIG. 21, FIG. 22(a) and FIG. 22(b), the case that a new road is added without generating a new intersection will be discussed.

Now assume that a new road as a by-pass (i.e. link #6 with nodes #7 and #8) is added to a road network the same as that shown in FIG. 14 (a), without involving a generation of a new intersection, as shown in FIG. 21.

In this case, the apparatus for generating the difference update data according to this embodiment generates difference update data 400d, as shown in FIG. 22 (a), including link data representing a link #6, node data representing a node #7 and node data representing a node #8, for example on the RAM 503. Herein a jump address of the node #7 directs to an address representing the node #3 that is included in the original data 100, a jump address of the node #8 directs to an address representing the node #6 that is included in the original data 100.

Furthermore, as shown in FIG. 22 (b), merge data 200d is generated, which includes address information to update a jump address of the node #2 with an address representing the node #7 that is included in the difference update data 400d, and an address information to update a jump address of the node #4 with an address representing the node #8 the is included in the difference update data 400d.

Furthermore, the merge data 200d includes an update flag of the node #2 to update an attribute flag that is included in the node data representing the node #2. The update flag of the node #2 indicates that the node #7 to be subsequently accessed is included in the difference update data 400d. Similarly, the merge data 200d includes an update flag of the node #4 to update an attribute flag that is included in the node data representing the node #4. The update flag of the node #4 indicates that the node #8 to be subsequently accessed is included in the difference update data 400d.

Each of these address information and update flags includes, similarly to the updated flag 201a (See FIG. 15), offset information and size information (both of them not shown). Thereby, the address information can be recorded at a jump address of a predetermined link data or node data, while the update flag can be recorded into a predetermined attribute flag.

After obtaining the difference update data 400d and the merge data 200d generated as mentioned above, the navigation apparatus according to this embodiment generates the updated data 300 as mentioned above on the basis of the difference update data 400d and the merge data 200d, which (the updated data 300) can be used as a road data as shown in FIG. 21 for the predetermined navigation processing.

As mentioned above, in the case that a new road is added, the navigation apparatus according to this embodiment can perform the predetermined navigation processing while making access alternately to road data represented by the updated data 300 and road data represented by the difference update data 400d, on the basis of the jump address information or the attribute flag.

Incidentally, a combination as appropriate among a change in a road type, a deletion of an existing road or an operation of the apparatus for generating the difference update data when a new road is added allows the difference update data 400 and the merge data 200 to be generated, in response to any change in the road conditions.

Consequently, according to the difference update data 400 generated by the apparatus for generating the difference update data of this embodiment, it is allowed that new link data or node data is added regardless of a predetermined format of the original data 100. On the other hand, according to the merge data 200 generated by the apparatus for generating the difference update data of this embodiment, a predetermined part of the original data 100 can be updated in accordance with a predetermined format. Alternatively, data can be recorded into a predetermined empty area of the original data 100. That is, the merge data 200 can be merged into the original data 100, without changing the interpretation of the predetermined format of the original data 100, while reflecting the new road conditions.

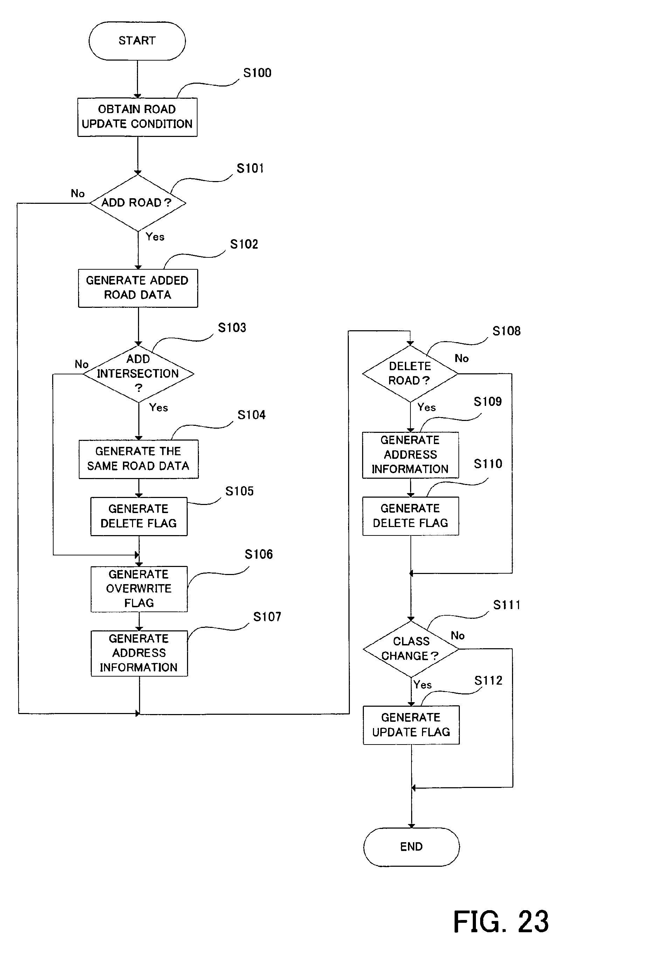

Next, with reference to a flow chart of FIG. 23, an operation of the apparatus for generating the difference update data according to this embodiment of the present invention (i.e. a method of generating the difference update data) will be discussed. FIG. 23 shows the operation of the apparatus for generating the difference update data of this embodiment.

As shown in FIG. 23, during the operation of the apparatus for generating the difference update data of this embodiment, firstly, a road update condition that may be inputted via the input device 510 or may be inputted as data is obtained (step S100). The control unit 500 judges whether or not the road update condition obtained as mentioned above involves an addition of a new road (i.e. link or node). If the addition of a new link or new node is not involved (step S101: NO), the process goes to a step S108.

On the other hand, if the addition of a new link or new node is involved (step S101: YES), the control unit 500 operates to generate difference update data 400 including the new link or new node (step S102), and store it into the RAM 503. Next, it is judged whether or not the addition of the new link or new node involves an addition of a new intersection (step S103). That is, it is judged whether or not the new link or new node connects to a position at which the original data 100 does not include any node. If the addition of the new intersection is not involved (step S103: NO), the process goes to a step S106.

On the other hand, if the addition of the new intersection is involved (step S103: YES), "same road data", which is the same as the original data in its existing links and nodes to be connected with the new link or new node, is generated (step S104) and stored into the RAM 503, in a state that the road data is included in the difference update data 400. Then, merge data 200 is generated (step S105), the merge data including a delete flag to delete the existing links and nodes to be connected with the new link or new node from the original data 100 for a processing, and the merge data 200 is then stored into the RAM 503.

After that, an update flag is generated and stored into the RAM 503 with the merge data 200, which includes the update flag, the update flag capable of updating some of attribute flags, which are included in the original data 100 and designates a link or a node included in the difference update data 400. Furthermore, address information to update their jump address with address of the new link or new node that is included in the difference update data 400 is generated (step S107), and stored into the RAM 503 with the merge data 200, which includes the address information.

Next, it is judged whether or not the road update condition involves a deletion of the existing link or node in the original data 100 (step S108). If the deletion of the existing link or node is not involved (step S108: NO), the process goes to a step S111.

On the other hand, if the deletion of the existing link or node is involved (step S108: YES), address information to update a jump address of another existing link or node that accesses the link or node to be deleted is generated (step S109), and stored into the RAM 503, with the merge data 200, which includes the address information. Then, a delete flag to delete the link or node to be deleted from the original data 100 for the processing (step S110) is generated, and stored into the RAM 503, with the merge data 200, which includes the delete flag.

Next, it is judged whether or not the road update condition involves a predetermined change such as a change in a road type of a link or node in the original data 100 (step S111). The "predetermined change" may be a change in a road type to classify the road such as a prefectural road and so on, a change in regulation information such as one-way traffic and so on, a change in an existence of a traffic signal or a change in a road name and so on. If the predetermined change is not involved (step S111: NO), the operation of the apparatus for generating the difference update data is terminated.

If the predetermined change is involved (step S111: YES), an update flag to update a predetermined part of the node or link in the original data 100 is generated (step S112) and stored into the RAM 503, with the merge data 200, which includes the update flag. Then the operation of the apparatus for generating difference update data is terminated.

Incidentally, the merge data 200 or the difference update data 400 generated as mentioned above may be stored in the hard disk 540, not in the RAM 503. Alternatively, the merge data 200 or the difference update data stored as mentioned above may be distributed to the user or the like of the navigation apparatus via the communicating device 530. Alternatively, it may be stored in a removal media to be distributed.

As mentioned above, according to the method of generating the difference update data in this embodiment, the difference update data can be generated in a form including the same road data in addition to or instead of a form including the new link or node that is added as mentioned above. On the other hand, the merge data can be generated including at least one of the update flag, the address flag, the delete flag and the over-write flag.

Furthermore, the navigation apparatus according to the present invention is not limited to the on-vehicle use disclosed in the aforementioned embodiments or specific examples, but also applicable to various navigation apparatuses including a use for various mobile bodies such as aircraft, shipping, two-wheeler etc. or to a use for a pedestrian or animal equipped with a PDA, a cell phone etc.

## Claims

1. An apparatus for generating difference update data for navigation with respect to a plurality of road data for the navigation, the plurality of road data being based on a predetermined format and each indicating at least one of an existing road and a junction thereof in a preset road network, the difference update data including one road data for the navigation, the one road data indicating at least one of a new road and a junction thereof and being updated versus the plurality of road data as a standard, **characterized in that** said apparatus comprises:
a first generating device (20) for generating the difference update data such that the difference update data includes, in addition to the one road data, same road data which is same as another road data indicating at least one of the existing road and the junction thereof that are connected to the new road or the junction thereof among the plurality of road data; and
a second generating device (20) for generating merge data defining a relationship between the difference update data and the plurality of road data for each road or each junction thereof, such that the merge data includes a delete flag to delete said another road data from the plurality of road data on a predetermined process for the navigation, in case that said first generating device generates the difference update data.

2. The apparatus according to claim 1, **characterized in that** the plurality of road data has an empty area on the predetermined format for said each road or said each junction thereof, and
the merge data includes address information indicating the empty area for said each road or said each junction.

3. The apparatus according to claim 1 or 2, **characterized in that** said apparatus further comprises a recording device (20, 31-36) for recording the difference update data generated by said first generating device (20) and the merge data generated by said second generating device (20) into a removal type recording medium.

4. The apparatus according to any one of claims 1 to 3, **characterized in that** said apparatus further comprises a communicating device (37, 38) for transferring the difference update data generated by said first generating device (20) and the merge data generated by said second generating device (20) via a communication network.

5. The apparatus according to any one of claims 1 to 4, **characterized in that** each of the plurality of road data and the one road data includes: link data for indicating a link that is representative of the road; and node data for indicating a node that is representative of the junction.

6. The apparatus according to claim 5, **characterized in that** the predetermined processing for the navigation includes a process of making access sequentially to the plurality of road data and the difference update data in such a manner that the link that is connected to the node is tracked.

7. The apparatus according to any one of claims 1 to 6, **characterized in that** the plurality of road data includes, for said each road data or said each junction: address information indicating a jump address to be subsequently accessed for the predetermined processing for the navigation; and an attribute flag indicating whether the jump address is included in the plurality of road data or in the difference update data.

8. The apparatus according to any one of claims 1 to 7, **characterized in that** the merge data includes: offset information indicating an offset of the difference update data corresponding to the merge data with respect to an address of the plurality of road data; and size information indicating data size of the difference update data corresponding to the merge data.

9. The apparatus according to any one of claims 1 to 8, **characterized in that** said second generating device (20) generates the merge data with respect to a data portion in the plurality of road data described by use of multiple kinds of preset code, such that the merge data includes an update flag to directly update the multiple kinds of preset code with the merge data corresponding thereto on the predetermined processing for the navigation.

10. A method of generating difference update data for navigation with respect to a plurality of road data for the navigation, the plurality of road data being based on a predetermined format and each indicating at least one of an existing road and a junction thereof in a preset road network, the difference update data including one road data for the navigation, the one road data indicating at least one of a new road and a junction thereof and being updated versus the plurality of road data as a standard, **characterized in that** said method comprises:
a first generating process of generating the difference update data such that the difference update data includes, in addition to the one road data, same road data which is same as another road data indicating at least one of the existing road and the junction thereof that are connected to the new road or the junction thereof among the plurality of road data; and
a second generating process of generating merge data defining a relationship between the difference update data and the plurality of road data for each road or each junction thereof, such that the merge data includes a delete flag to delete said another road data from the plurality of road data on a predetermined process for the navigation, in case that said first generating process generates the difference update data.

11. A navigation apparatus **characterized in that** said apparatus comprises:
a storing device (31-36) for storing (i) a plurality of road data for navigation being based on a predetermined format and each indicating at least one of an existing road and a junction thereof in a preset road network, (ii) difference update data generated with respect to the plurality of road data and including one road data for the navigation and same road data, the one road data indicating at least one of a new road and a junction thereof and being updated versus the plurality of road data as a standard, the same road data being same as another road data indicating at least one of the existing road and the junction thereof that are connected to the new road or the junction thereof among the plurality of road data; and (iii) merge data defining a relationship between the difference update data and the plurality of road data for each road or each junction thereof, and including a delete flag to delete said another road data from the plurality of road data on a predetermined process for the navigation;
a writing device (20) for generating updated data based on the predetermined format and including the plurality of road data and the merge data, by writing the merge data merged to a predetermined portion of the plurality of road data; and
a processing device (20) for making access to the plurality of road data and the merge data in the updated data and deleting said another road data from the plurality of road data on the predetermined processing for the navigation in accordance with the delete flag that is included in the accessed merge data, for making access further to the difference update data the relationship of which is defined by the accessed merge data, and for performing the predetermined processing for the navigation on the basis of the accessed plurality of road data and the accessed difference update data.

12. A navigation apparatus **characterized in that** said apparatus comprises:
a communicating device (37, 38) for receiving, via a communication network, at least one of (i) a plurality of road data for navigation being based on a predetermined format and each indicating at least one of an existing road and a junction thereof in a preset road network, (ii) difference update data generated with respect to the plurality of road data and including one road data for the navigation and same road data, the one road data indicating at least one of a new road and a junction thereof and being updated versus the plurality of road data as a standard, the same road data being same as another road data indicating at least one of the existing road and the junction thereof that are connected to the new road or the junction thereof among the plurality of road data; and (iii) merge data defining a relationship between the difference update data and the plurality of road data for each road or each junction thereof, and including a delete flag to delete said another road data from the plurality of road data on a predetermined process for the navigation;
a storing device (31-36) for storing some of the plurality of road data, the difference update data and the merge data other than at least one to be received by said communicating device;
a writing device (20) for generating updated data based on the predetermined format and including the plurality of road data and the merge data, by writing the merge data merged to a predetermined portion of the plurality of road data; and
a processing device (20) for making access to the plurality of road data and the merge data in the updated data and deleting said another road data from the plurality of road data on the predetermined processing for the navigation in accordance with the delete flag that is included in the accessed merge data, for making access further to the difference update data the relationship of which is defined by the accessed merge data, and for performing the predetermined processing for the navigation on the basis of the accessed plurality of road data and the accessed difference update data.

13. The apparatus according to claim 11 or 12, **characterized in that**
each of the plurality of road data and the one road data includes: link data for indicating a link that is representative of the road; and node data for indicating a node that is representative of the junction, and
the predetermined processing for the navigation includes a process of making access sequentially to the plurality of road data and the difference update data in such a manner that the link that is connected to the node is tracked.

14. The navigation apparatus according to any one of claims 11 to 13, **characterized in that** the plurality of road data includes, for said each road data or said each junction: address information indicating a jump address to be subsequently accessed for the predetermined processing for the navigation; and an attribute flag indicating whether the jump address is included in the plurality of road data or in the difference update data.

15. The navigation apparatus according to any one of claims 11 to 14, **characterized in that** the merge data includes, with respect to a data portion in the plurality of road data described by use of multiple kinds of preset code, an update flag to directly update the multiple kinds of preset code with the difference update data corresponding thereto on the predetermined processing for the navigation,.

16. A navigation method **characterized in that** said method comprises:
a storing process of storing (i) a plurality of road data for navigation being based on a predetermined format and each indicating at least one of an existing road and a junction thereof in a preset road network, (ii) difference update data generated with respect to the plurality of road data and including one road data for the navigation and same road data, the one road data indicating at least one of a new road and a junction thereof and being updated versus the plurality of road data as a standard, the same road data being same as another road data indicating at least one of the existing road and the junction thereof that are connected to the new road or the junction thereof among the plurality of road data; and (iii) merge data defining a relationship between the difference update data and the plurality of road data for each road or each junction thereof, and including a delete flag to delete said another road data from the plurality of road data on a predetermined process for the navigation;
a writing process of generating updated data based on the predetermined format and including the plurality of road data and the merge data, by writing the merge data merged to a predetermined portion of the plurality of road data; and
a processing process of making access to the plurality of road data and the merge data in the updated data and deleting said another road data from the plurality of road data on the predetermined processing for the navigation in accordance with the delete flag that is included in the accessed merge data, for making access further to the difference update data the relationship of which is defined by the accessed merge data, and for performing the predetermined processing for the navigation on the basis of the accessed plurality of road data and the accessed difference update data.

17. A navigation method **characterized in that** said method comprises:
a communicating process of receiving, via a communication network, at least one of (i) a plurality of road data for navigation being based on a predetermined format and each indicating at least one of an existing road and a junction thereof in a preset road network, (ii) difference update data generated with respect to the plurality of road data and including one road data for the navigation and same road data, the one road data indicating at least one of a new road and a junction thereof and being updated versus the plurality of road data as a standard, the same road data being same as another road data indicating at least one of the existing road and the junction thereof that are connected to the new road or the junction thereof among the plurality of road data; and (iii) merge data defining a relationship between the difference update data and the plurality of road data for each road or each junction thereof, and including a delete flag to delete said another road data from the plurality of road data on a predetermined process for the navigation;
a storing process of storing some of the plurality of road data, the difference update data and the merge data other than at least one to be received by said communicating process;
a writing process of generating updated data based on the predetermined format and including the plurality of road data and the merge data, by writing the merge data merged to a predetermined portion of the plurality of road data; and
a processing process of making access to the plurality of road data and the merge data in the updated data and deleting said another road data from the plurality of road data on the predetermined processing for the navigation in accordance with the delete flag that is included in the accessed merge data, for making access further to the difference update data the relationship of which is defined by the accessed merge data, and for performing the predetermined processing for the navigation on the basis of the accessed plurality of road data and the accessed difference update data.

18. A difference update data set comprising: difference update data for navigation; and merge data in combination, **characterized in that**
said difference update data comprises (i) one road data for the navigation generated with respect to a plurality of road data for navigation, the plurality of road data being based on a predetermined format and each indicating at least one of an existing road and a junction thereof in a preset road network, the one road data indicating at least one of a new road and a junction thereof and being updated versus the plurality of road data as a standard and (ii) same road data being same as another road data indicating at least one of the existing road and the junction thereof that are connected to the new road or the junction thereof among the plurality of road data, and
the merge data defines a relationship between the difference update data and the plurality of road data for each road or each junction thereof, and includes a delete flag to delete said another road data from the plurality of road data on a predetermined process for the navigation.

19. A computer program for tangibly embodying a program of instructions executable by a computer, **characterized in that** said computer program is to make the computer function as the first generating device (20) and the second generating device (20) in the apparatus according to any one of claims 1 to 9.

20. A computer program for tangibly embodying a program of instructions executable by a computer, **characterized in that** said computer program is to make the computer function as the processing device (20) and the writing device (20) in the navigation apparatus according to any one of claims 11 to 15.
